# EUROPÄISCHE PATENTSCHRIFT

(11) **EP 3 896 336 B1**
(45) Veröffentlichungstag und Bekanntmachung des Hinweises auf die Patenterteilung: **14.10.2026**
(21) Anmeldenummer: 21165000.7
(22) Anmeldetag: 25.03.2021
(51) Int. Cl.: F21V 17/00, F21V 23/04

(54) **SCHEINWERFERSYSTEM, SCHEINWERFER, OPTIKKOMPONENTE HIERFÜR UND VERFAHREN ZUM ERMITTELN EINER RÄUMLICHEN LICHTVERTEILUNG DERSELBEN**
HEADLAMP SYSTEM, HEADLAMP, OPTICAL COMPONENT THEREFOR AND METHOD FOR DETERMINING SPATIAL LIGHT DISTRIBUTION THEREOF
SYSTÈME DE PROJECTEUR, PROJECTEUR, COMPOSANTS OPTIQUES ASSOCIÉS ET LEUR PROCÉDÉ DE DÉTERMINATION D'UNE DISTRIBUTION LUMINEUSE SPATIALE

(30) Priorität: 02.04.2020 DE 102020109190
(43) Veröffentlichungstag der Anmeldung: 20.10.2021
(73) Patentinhaber: Arnold & Richter Cine Technik GmbH & Co. Betriebs KG, 80807 München (DE)
(72) Erfinder: Melzner, Erwin, 83112 Frasdorf (DE); Koch, Michael, 55120 Mainz (DE)
(74) Vertreter: Manitz Finsterwald Patent- und Rechtsanwaltspartnerschaft mbB

(56) Entgegenhaltungen:
- EP-A1- 3 229 055
- EP-A1- 3 450 837
- WO-A2-2012/032465
- US-A- 5 029 992
- US-A- 5 658 062
- US-A1- 2016 018 588

## Beschreibung

Die Erfindung betrifft ein Scheinwerfersystem zum Beleuchten einer Film- oder Bühnenumgebung, mit einem Scheinwerfer zum Erzeugen von Licht und mit zumindest einer mit dem Scheinwerfer koppelbaren Optikkomponente zum Erzeugen zumindest einer räumlichen Lichtverteilung.

Die Erfindung betrifft ferner eine Optikkomponente für einen Scheinwerfer zum Beleuchten einer Film- oder Bühnenumgebung; einen Scheinwerfer zum Erzeugen von Licht zum Beleuchten einer Film- oder Bühnenumgebung mit einer Koppeleinrichtung, mittels derer zumindest eine austauschbare Optikkomponente zum Erzeugen zumindest einer räumlichen Lichtverteilung mit dem Scheinwerfer koppelbar ist; einen Scheinwerfer zum Erzeugen von Licht zur Beleuchtung einer Film- oder Bühnenumgebung mit einer integrierten Optikkomponente zum Erzeugen zumindest einer räumlichen Lichtverteilung; sowie ein Verfahren zum Ermitteln einer räumlichen Lichtverteilung eines Scheinwerfersystems.

Aus EP 3 450 837 A1 ist eine Zoom-Optik bekannt, bei welcher verschiedene Linsengruppen unabhängig voneinander entlang einer optischen Achse bewegbar sind.

In EP 3 229 055 A1 ist ein Projektor beschrieben, welcher eine automatische Zoom- und Fokusanpassung ermöglicht, wenn der Projektor dazu genutzt wird, ein Bild auf einen gekrümmten Bildschirm zu projizieren.

Ferner ist in US 5 658 062 A ein Projektor beschrieben, welcher unabhängig von einer jeweiligen Zoomeinstellung eine konstante Helligkeit ermöglichen soll. Dazu wird die Position einer Zoomlinse gemessen und die Intensität einer Lichtquelle des Projektors in Abhängigkeit von der Zoomeinstellung angepasst.

Bei einem aus US 5 029 992 A bekannten Projektor sind ferner unabhängig voneinander bewegbare Linsen vorgesehen, um automatisch von einem Benutzer eingegebene Fokus- und Zoomwerte einstellen zu können.

US 2016/0018588 A1 beschreibt eine modulare Beleuchtungseinrichtung, welche eine Lichtquelle sowie damit koppelbare Lichtleiter aufweist. An der Lichtquelle kann ein Sensor zum Erfassen des Lichtleiters vorgesehen sein, mittels dessen ein Typ des gekoppelten Lichtleiters ermittelt werden kann.

Derartige Scheinwerfersysteme können beispielsweise eingesetzt werden, um eine Film- oder eine Bühnenumgebung während einer Aufnahme einer Filmszene (z.B. in einem Studio) oder während einer Theateraufführung zu beleuchten. Dabei können die Scheinwerfersysteme einen Scheinwerfer umfassen, der eine Beleuchtungseinrichtung aufweist um Licht einer gewünschten Helligkeit und Farbe zu erzeugen. Ein Scheinwerfer der hier in Rede stehenden Art ist typischerweise stationär angeordnet und für die Erzeugung einer Dauerbeleuchtung ausgebildet. Eine mit dem Scheinwerfer gekoppelte oder koppelbare Optikkomponente kann dazu vorgesehen sein, eine auf die aufgenommene bzw. gespielte Szene abgestimmte räumliche Lichtverteilung zu erzeugen. Beispielsweise kann es bei einer Aufnahme einer bestimmten Szene gewünscht sein, das von einem Scheinwerfer erzeugte Licht fokussiert auf eine kreisförmige oder ellipsenförmige Fläche zu richten, um in einer solchen Spot-Einstellung einen bestimmten Bereich und beispielsweise einen Schauspieler deutlich hervorzuheben. Alternativ kann es beispielsweise vorgesehen sein, in einer Flood-Einstellung des Scheinwerfersystems eine verhältnismäßig große Fläche gleichmäßig zu beleuchten und einen weichen Übergang der Lichtverhältnisse an den Rändern der beleuchteten Fläche hervorzurufen.

Um solche Einstellungen sowie einen Übergang zwischen verschiedenen räumlichen Lichtverteilungen zu ermöglichen, können Optikkomponenten beispielsweise (Stufen- oder kontinuierlich geformte) Linsen, Projektionslinsen, Reflektoren (für gerichtete oder diffuse Reflexion), Streuscheiben oder Filter umfassen, die relativ zu einer Beleuchtungseinrichtung bzw. einem oder mehreren Leuchtmitteln des Scheinwerfers entlang dessen optischer Achse beweglich sind. Ein Reflektor kann dabei insbesondere als ein durchgängiger Spiegel ausgebildet sein, wobei es auch möglich ist, einen Reflektor in mehrere Segmente unterteilt auszubilden. Durch solche Einstellmöglichkeiten der Optikkomponente werden eine flexible Nutzung des Scheinwerfersystems und das Erzeugen verschiedener räumlicher Lichtverteilungen, insbesondere auch mit kontinuierlichen Übergängen, ermöglicht, ohne dass beispielsweise das Scheinwerfersystem oder Teile desselben ausgetauscht werden muss bzw. müssen. Ferner kann ein Scheinwerfer mit einer Mehrzahl von sich unterscheidenden Optikkomponenten koppelbar sein, so dass mit demselben Scheinwerfer in Abhängigkeit von der jeweiligen gekoppelten Optikkomponente und deren Einstellung flexibel verschiedenste räumliche Lichtverteilungen erzeugt werden können, um die räumliche Lichtverteilung optimal an eine aufzuzeichnende Szene anpassen zu können.

Aufgrund dieser zahlreichen Einstellungsmöglichkeiten und des Einflusses der jeweiligen erzeugten räumlichen Lichtverteilung auf den Eindruck einer Szene besteht ein Bedarf, Daten bzw. Informationen über die von dem Scheinwerfersystem bzw. der Optikkomponente erzeugbaren räumlichen Lichtverteilung erhalten und sammeln zu können. Insbesondere könnten solche Daten beispielsweise Möglichkeiten zur verbesserten Nachbearbeitung einer Filmszene in der Postproduktion bieten. Ebenso könnte die Kenntnis einer mittels einer Optikkomponente erzeugbaren räumlichen Lichtverteilung beispielsweise Simulationen der Lichtverhältnisse vor Beginn von Dreharbeiten ermöglichen, um geeignete Einstellungen bereits im Voraus bestimmen zu können.

Es ist daher eine Aufgabe der Erfindung, ein flexibel und vielseitig einsetzbares Scheinwerfersystem mit einer Möglichkeit zu schaffen, Daten über die mittels einer Optikkomponente des Scheinwerfersystems erzeugbaren räumlichen Lichtverteilungen gewinnen, zur Verfügung stellen und verwerten zu können.

Diese Aufgabe wird gemäß einem ersten Erfindungsaspekt gelöst durch ein Scheinwerfersystem mit den Merkmalen des Anspruchs 1, gemäß welchem die Optikkomponente und/oder der Scheinwerfer einen Speicher aufweist/aufweisen, in dem eine Information über die von der Optikkomponente erzeugbare räumliche Lichtverteilung gespeichert ist. Die gespeicherte Information repräsentiert dabei eine von der Optikkomponente erzeugbare räumliche Helligkeitsverteilung und/oder räumliche Farb- oder Spektralverteilung.

Die Optikkomponente des Scheinwerfersystems dient somit dazu, in einem mit dem Scheinwerfer gekoppelten Zustand aus dem von dem Scheinwerfer ausgegebenen Licht eine bestimmte räumliche Lichtverteilung zu erzeugen. Insofern bestimmt die Optikkomponente - zumindest teilweise - die räumliche Verteilung des von dem Scheinwerfer erzeugten bzw. des von dem Scheinwerfersystem ausgegebenen Lichtes. Dabei kann die erzeugbare räumliche Lichtverteilung insbesondere von dem Aufbau der Optikkomponente, beispielsweise einer Anordnung von Linsen, Reflektoren, Spiegel oder Filtern, sowie von deren Einstellung abhängen, beispielsweise einem Abstand einer Linse zu den Leuchtmitteln eines Scheinwerfers. Die Information über die von der Optikkomponente erzeugbare räumliche Lichtverteilung kann entsprechend insbesondere einer geometrischen und/oder spektralen Lichtformungscharakteristik der Optikkomponente entsprechen.

Indem der Speicher eine Information über die erzeugbare räumliche Lichtverteilung bereitstellt, können Daten über die tatsächlich erzeugte bzw. erzeugbare räumliche Lichtverteilung ermittelt und beispielsweise der Postproduktion zur Verfügung gestellt, während einer Nachbearbeitung berücksichtigt und/oder während einer Neuplanung einer Filmaufnahme berücksichtigt werden.

Die Information repräsentiert ferner das bei gekoppelter Optikkomponente auf jeweilige Raumpunkte entfallende Licht. Hierfür kann die gespeicherte Information beispielsweise eine Nachschlagetabelle umfassen, die einer Mehrzahl vorgegebener oder vorgebbarer Raumpunkte einen jeweiligen Helligkeitswert zuordnet, der das auf diesen Raumpunkt entfallende Licht repräsentiert. Ferner können solche Nachschlagetabellen beispielsweise für verschiedene Wellenlängenbereiche des Lichts (d.h. für verschiedene Spektralbereiche oder Bereiche in einem Farbraum) erstellt sein, sodass eine erzeugbare räumliche Farb- oder Spektralverteilung anhand der Information ermittelt werden kann. Insbesondere können anhand einer Information über eine erzeugbare räumliche Farb- oder Spektralverteilung auch etwaige durch die Optikkomponente bedingte Veränderungen des Emissionsspektrums des Scheinwerfersystems bzw. der Farbe des von dem Scheinwerfersystem erzeugten Lichtes identifizierbar oder lokalisierbar sein, so dass solche Veränderungen beispielsweise bei der Einstellung des Scheinwerfers bzw. dessen Beleuchtungseinrichtung berücksichtigt werden können. Neben einer Nachschlagetabelle kann es auch vorgesehen sein, dass die gespeicherte Information eine Rechenvorschrift umfasst, anhand derer die erzeugbare räumliche Lichtverteilung, insbesondere eine räumliche Helligkeitsverteilung und/oder eine räumliche Farb- oder Spektralverteilung, berechenbar ist.

Zum Repräsentieren einer räumlichen Farbverteilung kann es die gespeicherte Information ermöglichen, verschiedenen Raumpunkten einen Farbort in einem Farbraum zuzuordnen. Beispielsweise kann die Information dazu eine Nachschlagetabelle umfassen, welche einer Mehrzahl von Raumpunkten jeweilige Koordinaten eines (insbesondere dreidimensionalen) Farbraums zuordnet. Jedem der Raumpunkte kann somit ein Farbort in dem Farbraum zugeordnet werden, so dass sich aus der Nachschlagetabelle eine räumliche Farbverteilung ergibt. Hierbei kann ein Farbort innerhalb eines dreidimensionalen Farbraums bereits durch lediglich zwei Koordinaten hinreichend bestimmt sein, so dass eine Nachschlagetabelle beispielsweise lediglich eine x-Koordinate und eine y-Koordinate enthalten muss, wobei die dritte Koordinate (z-Koordinate) rechnerisch ermittelt wird. Alternativ können auch die drei Koordinaten des dreidimensionalen Farbraums (x-, y- und z-Koordinate) in der Nachschlagetabelle enthalten sein. Anstelle einer Nachschlagetabelle kann zum Ermitteln einer räumlichen Farbverteilung die gespeicherte Information auch eine entsprechende Rechenvorschrift umfassen.

Eine räumliche Farbverteilung im Sinne der vorliegenden Offenbarung beschreibt folglich eine räumliche Verteilung von Farbwerten oder Farbörtern. Dabei wird bzw. werden verschiedenen Punkten im Raum ein Wert bzw. mehrere Werte zugewiesen, welche die Farbe des auf diesen Punkt auftreffenden Lichts repräsentiert bzw. repräsentieren. Eine konkrete spektrale Auflösung des auftreffenden Lichts erfolgt hingegen durch eine räumliche Farbverteilung nicht. Insofern kann eine räumliche Farbverteilung als eine Vereinfachung einer räumlichen Spektralverteilung verstanden werden. Eine räumliche Farbverteilung kann jedoch zugleich auch eine räumliche Helligkeitsverteilung beinhalten.

Eine räumliche Spektralverteilung im Sinne der vorliegenden Offenbarung beschreibt die erzeugbare räumliche Lichtverteilung nicht nur räumlich (nach einer Mehrzahl von Raumpunkten), sondern auch spektral aufgelöst, so dass bezüglich eines jeweiligen Raumpunkts für einen oder mehrere Wellenlängenbereiche eine Wellenlängen-abhängige Information über die Lichtmenge vorliegt (relative Verteilung oder Absolutwerte; bezogen beispielsweise auf Lichtstärke). Insofern umfasst die räumliche Spektralverteilung somit erweiterte bzw. präzisere Informationen im Vergleich zu einer räumlichen Farbverteilung.

Generell kann die im Zusammenhang mit den verschiedenen Erfindungsaspekten genannte gespeicherte Information die erzeugbare räumliche Lichtverteilung direkt beschreiben, wozu die räumliche Lichtverteilung beispielsweise unmittelbar oder parametriert, etwa in Form einer Nachschlagetabelle (Look-Up-Table), in dem Speicher gespeichert sein kann, und/oder die gespeicherte Information kann Rechenvorschriften, insbesondere Instruktionen und/oder Berechnungsparameter, umfassen, welche ein Berechnen der räumlichen Lichtverteilung zumindest näherungsweise ermöglichen. Die gespeicherte Information kann somit eine Approximation der real erzeugbaren räumlichen Lichtverteilung liefern und/oder eine rechnerische Ermittlung einer solchen Approximation ermöglichen.

Mögliche Ausführungsformen der Erfindung sind den Ansprüchen, der nachfolgenden Beschreibung sowie den Zeichnungen zu entnehmen.

Um Daten über die räumliche Lichtverteilung gewinnen und aus dem Scheinwerfersystem ausgeben zu können, kann der Speicher generell auslesbar sein. Bei dem Speicher kann es sich insbesondere um einen nicht-flüchtigen elektronischen Speicher handeln (z.B. EEPROM).

Bei einigen Ausführungsformen kann die Information in einem Speicher der Optikkomponente gespeichert sein. Die Information kann dabei über eine Schnittstelle an den Scheinwerfer übermittelbar sein, wenn die Optikkomponente mit dem Scheinwerfer gekoppelt ist. Der Scheinwerfer kann ferner eine Berechnungseinrichtung aufweisen, welche dazu ausgebildet ist, die erzeugbare bzw. erzeugte räumliche Lichtverteilung anhand der übermittelten Information zu ermitteln (z.B. nachschlagen und/oder berechnen) und welche insbesondere als ein Mikroprozessor ausgebildet sein kann. Das ermittelte Ergebnis kann daraufhin über eine weitere Schnittstelle des Scheinwerfers nach außen, beispielsweise an eine externe Datensammeleinrichtung, weitergegeben werden, sodass die Daten über die räumliche Lichtverteilung für weitere Schritte der Bearbeitung genutzt werden können. Dabei kann die Ausgabe der berechneten räumlichen Lichtverteilung nach außen drahtlos oder drahtgebunden erfolgen. Auch die Information selbst oder sonstige in dem Speicher gespeicherte Daten können über die Schnittstellen nach außen übertragbar sein.

Alternativ oder zusätzlich dazu kann die Optikkomponente beispielsweise selbst eine solche Berechnungseinrichtung umfassen, welche dazu ausgebildet ist, die von der Optikkomponente erzeugbare bzw. erzeugte räumliche Lichtverteilung anhand der in einem Speicher der Optikkomponente gespeicherten Information zu ermitteln. Die innerhalb der Optikkomponente ermittelte räumliche Lichtverteilung kann daraufhin beispielsweise über eine Schnittstelle an den Scheinwerfer übertragen und von dem Scheinwerfer über eine weitere Schnittstelle auslesbar zur Verfügung gestellt werden, um in der Postproduktion oder bei vorbereitenden Simulationen berücksichtigt werden zu können. Auch dabei ist eine direkte Übermittlung der die erzeugbare räumliche Lichtverteilung beschreibenden Daten über eine Schnittstelle von der Optikkomponente nach außen möglich.

Grundsätzlich kann eine etwaige Ermittlung der erzeugbaren räumlichen Lichtverteilung anhand der gespeicherten Information auch in mehreren Schritten erfolgen, so dass sowohl die Optikkomponente als auch der Scheinwerfer eine jeweilige Berechnungseinrichtung aufweisen können. Hierbei kann ein erstes, von der Berechnungseinrichtung der Optikkomponente ermitteltes Ergebnis über eine Schnittstelle an den Scheinwerfer übermittelt werden, wobei die Berechnungseinrichtung des Scheinwerfers dazu ausgebildet sein kann, die erzeugbare räumliche Lichtverteilung anhand dieses ersten Ergebnisses zu ermitteln. Die von der Berechnungseinrichtung des Scheinwerfers ermittelte räumliche Lichtverteilung kann daraufhin über eine, insbesondere weitere Schnittstelle nach außen ausgebbar sein.

Ferner kann es vorgesehen sein, dass die Information aus dem Speicher der Optikkomponente über eine Schnittstelle lediglich nach außen weitergegeben wird, ohne dass eine weitere Ermittlung oder Berechnung der räumlichen Lichtverteilung innerhalb des Scheinwerfersystems erfolgt. Dies kann beispielsweise vorgesehen sein, wenn die gespeicherte Information die erzeugbare räumliche Lichtverteilung, beispielsweise in Form einer Nachschlagetabelle, unmittelbar wiedergibt und die räumliche Lichtverteilung beschreibende Daten somit ohne zusätzliche Berechnungsschritte zur Verfügung gestellt werden können. Ebenso ist es möglich, dass eine Berechnung zum Ermitteln der räumlichen Lichtverteilung anhand der über die Schnittstellen nach außen übermittelten Information von einer externen Einrichtung durchgeführt wird, wobei beispielsweise eine Übermittlung an ein Mobilfunkgerät bzw. Smartphone mit einer Lichtplanungs- bzw. Lichtauswerte-App oder an eine zentrale Einrichtung zum Sammeln und Verarbeiten von Metadaten vorgesehen sein kann. Die Schnittstelle kann dabei an der Optikkomponente angeordnet sein oder es kann vorgesehen sein, dass die Information zunächst über eine erste Schnittstelle an den Scheinwerfer und daraufhin über eine zweite Schnittstelle nach außen übermittelt wird.

Der Speicher mit der Information über die von der Optikkomponente erzeugbare räumliche Lichtverteilung kann auch Teil des Scheinwerfers sein. Dabei kann der Scheinwerfer beispielsweise eine Erfassungseinrichtung oder eine Auswahleinrichtung aufweisen, mittels derer eine jeweilige gekoppelte Optikkomponente automatisch erkannt bzw. die ausgewählte Optikkomponente von einem Benutzer eingegeben werden kann. Zum automatischen Erfassen können die koppelbaren Optikkomponenten beispielsweise eine jeweilige auslesbare Kodierung aufweisen, welche eine Identifikation der Optikkomponente bei einem Koppeln mit dem Scheinwerfer ermöglicht. In dem Speicher des Scheinwerfers können für eine Mehrzahl von koppelbaren Optikkomponenten jeweilige Informationen über die mittels der Optikkomponenten erzeugbaren räumlichen Lichtverteilungen gespeichert sein, so dass nach einer Identifikation bzw. Auswahl der gekoppelten Optikkomponente die entsprechende Information aus dem Speicher entnommen werden kann. Wiederum kann die Information beispielsweise von einer Berechnungseinrichtung des Scheinwerfers genutzt werden, um die erzeugbare bzw. erzeugte räumliche Lichtverteilung zu ermitteln oder die Information selbst kann die erzeugbare räumliche Lichtverteilung unmittelbar wiedergeben. Sowohl eine etwaige berechnete Lichtverteilung als auch die gespeicherte Information selbst können über eine Schnittstelle des Scheinwerfers an externe Einrichtungen übermittelbar sein.

Unabhängig von den vorstehend beschriebenen Ausführungsformen und der Anordnung des Speichers ermöglicht es ein Scheinwerfersystem mit einem Speicher, in dem eine Information über die erzeugbare räumliche Lichtverteilung gespeichert ist, somit generell, die erzeugbare bzw. erzeugte räumliche Lichtverteilung zu ermitteln und die entsprechenden Daten zur weiteren Verarbeitung bzw. Berücksichtigung zur Verfügung zu stellen. Dabei können in dem Speicher insbesondere auch weitere Eigenschaften der Optikkomponente des Scheinwerfersystems gespeichert sein, beispielsweise eine Serien- oder Artikelnummer der Optikkomponente, um möglichst vollständige und umfassende Lichtdaten weitergeben zu können. Auch beispielsweise ein Lichtstärke-zu-Lichtstrom-Verstärkungsfaktor der Optikkomponente, Temperaturmesswerte von kritischen Bauteilen, räumliche Positionen von lichtbeeinflussenden Bauelementen und/oder Daten zu den Abmessungen der Optikkomponente oder der Lichtaustrittsfläche kann bzw. können in dem Speicher gespeichert und dadurch abrufbar sein.

Generell kann die erzeugbare räumliche Lichtverteilung zusammen mit sonstigen von dem Scheinwerfersystem nach außen übermittelten Daten in einem gemeinsamen Datensatz übertragen werden, so dass der Postproduktion möglichst vollständige Lichtdaten bereitgestellt werden können. Grundsätzlich kann es dabei zunächst vorgesehen sein, Lichtverteilungsdaten in einem EULUMDAT-Format (mit einer Dateiendung .LTD oder .IES) oder in einem ähnlichen Format zu übertragen. Um weitere Metadaten, wie erläutert beispielsweise Temperaturmesswerte oder eine Seriennummer der Optikkomponente, mit solchen Lichtverteilungsdaten in einem gemeinsamen Datensatz übertragen zu können, können die EULUMDAT-Daten insbesondere in einem umfassenderen Datenformat mit den weiteren Metadaten kombiniert werden. Beispielsweise kann eine Zusammenstellung der Daten im Material Exchange Format (Dateiendung .MFX) vorgesehen sein, um eine Weiterverarbeitung zu vereinfachen.

Ferner kann die gespeicherte Information einen Halbstreuwinkel, Zehntelstreuwinkel, "beam angle" bzw. Abstrahlwinkel oder eine ähnliche Eigenschaft der Optikkomponente repräsentieren. Auch eine solche Information kann es, zumindest näherungsweise, ermöglichen, die erzeugbare räumliche Lichtverteilung der Optikkomponente zu ermitteln und die erzeugbare räumliche Lichtverteilung näherungsweise bei weiteren Schritten der Postproduktion zu berücksichtigen.

Bei einigen Ausführungsformen kann die gespeicherte Information eine gemessene und von der Optikkomponente erzeugbare räumliche Lichtverteilung parametrisieren. Beispielsweise kann in einem insbesondere werksseitigen Kalibrierungsschritt eine räumliche Helligkeitsverteilung gemessen werden, wenn die Optikkomponente mit dem Scheinwerfer gekoppelt ist, und in Form von Werte-Tupeln aus Raumpunkten und gemessenen Helligkeitswerten oder einer Nachschlagetabelle in dem Speicher gespeichert werden. Ferner kann eine solche gemessene räumliche Lichtverteilung als Funktion, beispielsweise mittels eines Fits, parametrisiert werden und die ermittelten Parameterwerte sowie der funktionale Zusammenhang können als Information in dem Speicher gespeichert werden.

Bei einigen Ausführungsformen kann das Scheinwerfersystem eine Schnittstelle aufweisen, die dazu ausgebildet ist, die gespeicherte Information oder hieraus abgeleitete Werte auszugeben. Eine solche Schnittstelle, die insbesondere als elektronische Schnittstelle ausgebildet sein kann, kann es dabei ermöglichen, die gespeicherte Information oder beispielsweise ein Berechnungsergebnis zum Nähern der erzeugbaren räumlichen Lichtverteilung nach außen weiterzugeben, so dass die gewonnenen Daten über die räumliche Lichtverteilung genutzt werden können. Dabei kann sowohl eine drahtgebundene als auch eine drahtlose Übermittlung vorgesehen sein. Insbesondere kann eine Übermittlung an eine bzw. ein Auslesen durch eine zentrale Datensammeleinrichtung vorgesehen sein, an welcher beispielsweise auch Daten sonstiger an einem Dreh beteiligter Geräte zum Erstellen möglichst umfassender Metadaten gesammelt werden können. Die Schnittstelle kann an dem Scheinwerfer oder an der Optikkomponente ausgebildet sein.

Bei einigen Ausführungsformen kann die von der Optikkomponente erzeugbare räumliche Lichtverteilung durch Einstellen zumindest eines Optikeinstellparameters veränderbar sein. Beispielsweise kann die Optikkomponente eine (Stufen-) Linse, einen Reflektor oder einen Spiegel umfassen, welche(r) relativ zu dem Scheinwerfer bzw. dessen Beleuchtungseinrichtung bewegbar ist, wobei sich beispielsweise ein Halbstreuwinkel der Optikkomponente in Abhängigkeit von diesem Abstand verändern kann. Dabei kann es vorgesehen sein, dass die gespeicherte Information eine Beschreibung der Abhängigkeit der erzeugbaren räumlichen Lichtverteilung von veränderlichen Werten des Optikeinstellparameters umfasst, so dass die jeweilige bei einem bestimmten Wert des Optikeinstellparameters einer solchen flexibel einsetzbaren Optikkomponente erzeugbare räumliche Lichtverteilung ermittelbar sein kann. Dabei kann ein eingestellter Wert des Optikeinstellparameters beispielsweise mittels eines an dem Scheinwerfer oder der Optikkomponente angeordneten Sensors gemessen werden, wobei beispielsweise ein gemessener Abstand zwischen einer (Stufen-) Linse und den Leuchtmitteln eines Scheinwerfers in einen Halbstreuwinkel umgerechnet und der Halbstreuwinkel als Optikeinstellparameter berücksichtigt werden kann. Das Einstellen des zumindest einen Optikeinstellparameters kann generell mittels einer manuell betätigbaren Verstelleinrichtung (also händisch), oder mittels einer elektrisch ansteuerbaren Verstelleinrichtung (z.B. Elektromotor) erfolgen.

Grundsätzlich kann die gespeicherte Information eine Beschreibung der Abhängigkeit der erzeugbaren räumlichen Lichtverteilung unmittelbar von Parametern wie dem genannten Abstand einer (Stufen-) Linse zu den Leuchtmitteln eines Scheinwerfers oder einem Abstand mehrerer Linsen einer Optikkomponente zueinander umfassen. Es ist somit nicht zwingend erforderlich, dass solche unmittelbar die Einstellung der Optikkomponente betreffende Optikeinstellparameter zunächst in einen aus dieser Einstellung resultierenden charakteristischen Winkel umgerechnet werden. Insofern erfolgt im Sinne der vorliegenden Offenbarung grundsätzlich auch dann eine Berücksichtigung eines Halbstreuwinkels als Optikeinstellparameter, wenn nicht dessen Wert beispielsweise in einer Berechnung der erzeugbaren räumlichen Lichtverteilung direkt eingesetzt oder in einer Nachschlagetabelle abgefragt wird, sondern ein Optikeinstellparameter, welcher sich auf den Halbstreuwinkel auswirkt, bestimmt und zum Ermitteln der räumlichen Lichtverteilung genutzt wird. Insbesondere kommt dabei eine Berücksichtigung der erwähnten Abstände von optischen Elementen der Optikkomponente zueinander oder zu einer Beleuchtungseinrichtung in Betracht.

Es kann vorgesehen sein, dass die gespeicherte Information zumindest eine erste Information, welche die von der Optikkomponente bei einem ersten Wert des Optikeinstellparameters erzeugbare räumliche Lichtverteilung repräsentiert, und eine zweite Information, welche die von der Optikkomponente bei einem zweiten Wert des Optikeinstellparameters erzeugbare räumliche Lichtverteilung repräsentiert, umfasst. Beispielsweise kann die Information zumindest eine jeweilige Parametrisierung einer gemessenen und von der Optikkomponente erzeugbaren räumlichen Lichtverteilung bei dem ersten und dem zweiten Wert des Optikeinstellparameters umfassen. Insbesondere können dabei für diskrete Werte des Optikeinstellparameters jeweilige Nachschlagetabellen mit Raumpunkten und auf diese Raumpunkte entfallendem Licht gespeichert sein, um die räumliche Lichtverteilung bei einem jeweiligen Wert des Optikeinstellparameters ermitteln zu können. Für diskret einstellbare Optikkomponenten können dabei für jeden einstellbaren Wert des Optikeinstellparameters solche Tabellen gespeichert sein. Bei kontinuierlich veränderbaren Optikkomponenten kann es beispielsweise vorgesehen sein, die bei einem bestimmten Wert erzeugbare räumliche Lichtverteilung durch diejenige gemessene räumliche Lichtverteilung anzunähern, welche bei einem Wert des Optikeinstellparameters gemessen wurde, der dem tatsächlich eingestellten oder gewählten Wert am nächsten liegt.

Bei einigen Ausführungsformen kann die gespeicherte Information eine Rechenvorschrift zur Ermittlung der räumlichen Lichtverteilung in Abhängigkeit von einem einstellten Wert des Optikeinstellparameters umfassen. Insbesondere kann es eine solche Rechenvorschrift ermöglichen, die erzeugbare räumliche Lichtverteilung bei einem Wert des Optikeinstellparameters zwischen dem ersten und dem zweiten Wert des Optikeinstellparameters als eine Approximation zu ermitteln, wobei die jeweiligen erzeugbaren Lichtverteilungen bei dem ersten und dem zweiten Wert des Optikeinstellparameters gemessen sein können. Dabei kann die Rechenvorschrift eine Vorschrift zur Interpolation zwischen zwei bei jeweiligen Werten des Optikeinstellparameters gemessenen räumlichen Lichtverteilungen definieren, wobei beispielsweise eine einfache lineare Interpolation zwischen der ersten und der zweiten räumlichen Lichtverteilung bzw. jeweiligen gemessenen räumlichen Lichtverteilungen vorgesehen sein kann. Insbesondere kann dies eine äußerst schnelle Ermittlung und das Bereitstellen der Daten über die räumliche Lichtverteilung in Echtzeit ermöglichen. Ferner kann es vorgesehen sein, dass die Rechenvorschrift eine Ermittlung der erzeugbaren räumlichen Lichtverteilung basierend auf einem oder mehreren physikalischen Modellen ermöglicht.

Ferner kann die Rechenvorschrift bei einigen Ausführungsformen für eine Mehrzahl von Raumpunkten zumindest eine jeweilige Polynominterpolation umfassen, welche die Abhängigkeit des Anteils der erzeugbaren Lichtverteilung an dem jeweiligen Raumpunkt von dem Wert des Optikeinstellparameters beschreibt. Dabei können als Stützstellen der Polynominterpolationen insbesondere bei verschiedenen Werten des Optikeinstellparameters gemessene räumliche Lichtverteilungen dienen, wobei durch solche Polynominterpolationen mit adäquatem Rechenaufwand und ohne auf komplexe physikalische Modelle zurückgreifen zu müssen eine verlässliche Näherung der räumlichen Lichtverteilung in Abhängigkeit von dem Optikeinstellparameter bereitgestellt werden kann. Insbesondere können diese Polynominterpolationen bzw. deren Parameter bereits in einem werksseitigen Kalibrierungsschritt bzw. Parametrisierungsschritt ermittelt und gemeinsam mit den entsprechenden Raumpunkten in dem Speicher gespeichert werden, so dass diese Berechnungsschritte und der damit verbundene Zeitaufwand lediglich einmal und insbesondere nicht von dem Benutzer des Scheinwerfersystems selbst durchgeführt werden muss.

Ferner kann es vorgesehen sein, dass die Rechenvorschrift für die Mehrzahl von Raumpunkten eine jeweilige Mehrzahl von Polynominterpolationen umfasst, wobei eine jeweilige Polynominterpolation die Abhängigkeit der Lichtverteilung an dem jeweiligen Raumpunkt von dem Wert des Optikeinstellparameters in einem bestimmten Wellenlängenbereich beschreibt. Dies kann es ermöglichen, die räumliche Farb- oder Spektralverteilung in Abhängigkeit von dem Optikeinstellparameter anhand der Mehrzahl von Polynominterpolationen zu bestimmen und die gewonnenen Daten in weiteren Schritten der Filmproduktion, insbesondere der Postproduktion, zu nutzen.

Bei einigen Ausführungsformen kann das Scheinwerfersystem eine Berechnungseinrichtung aufweisen, welche dazu ausgebildet ist, die von der Optikkomponente erzeugbare räumliche Lichtverteilung anhand der in dem Speicher gespeicherten Informationen zumindest näherungsweise zu ermitteln. Dabei kann die Berechnungseinrichtung, beispielsweise als Mikroprozessor, Teil des Scheinwerfers oder der Optikkomponente sein, wobei grundsätzlich auch eine mehrstufige Ermittlung vorgesehen und die Berechnungseinrichtung auf den Scheinwerfer und die Optikkomponente verteilt sein kann. Der Speicher kann entsprechend mit der Berechnungseinrichtung verbunden oder verbindbar sein, so dass die in dem Speicher gespeicherte Information der Berechnungseinrichtung zur Verfügung gestellt werden kann. Insbesondere eine dem Scheinwerfer zugehörige Berechnungseinrichtung kann mit dem Speicher verbindbar sein, wobei diese Verbindung beispielsweise automatisch in Folge einer Kopplung der Optikkomponente mit dem Scheinwerfer erzeugt werden kann. Ferner kann es auch vorgesehen sein, dass eine externe Einrichtung eine Berechnungseinrichtung aufweist, welche mit dem Scheinwerfersystem, insbesondere mit dem Scheinwerfer, verbindbar sein kann, um den Speicher auszulesen. Beispielsweise kann eine solche externe Berechnungseinrichtung als Teil einer Lichtplanungs-App vorgesehen sein, welche beispielsweise durch ein Mobilfunkgerät bzw. Smartphone ausführbar sein kann.

Es kann vorgesehen sein, dass die Berechnungseinrichtung dazu ausgebildet ist, bei der Ermittlung der von der Optikkomponente erzeugbaren räumlichen Lichtverteilung einen Wert zumindest eines einstellbaren Parameters des Scheinwerfersystems zu berücksichtigen. Insbesondere kann die Berechnungseinrichtung dazu ausgebildet sein, einen einstellbaren Wert eines Optikeinstellparameters der Optikkomponente, beispielsweise einen Halbstreuwinkel, bei der Ermittlung der von der Optikkomponente erzeugbaren räumlichen Lichtverteilung zu berücksichtigen. Dabei kann die Berechnungseinrichtung bei der Ermittlung der räumlichen Lichtverteilung beispielsweise auf die bereits genannten Polynominterpolationen zur Approximation des auf einen jeweiligen Raumpunkt entfallenden Anteils von Licht in Abhängigkeit von dem Optikeinstellparameter zurückgreifen und für eine Mehrzahl von Raumpunkten einen jeweiligen Wert des Optikeinstellparameters in die entsprechenden Polynominterpolationen einsetzen, um eine Approximation der erzeugten räumlichen Lichtverteilung bei diesem Wert des Optikeinstellparameters zu ermitteln. Alternativ kann die Berechnungseinrichtung beispielsweise dazu ausgebildet sein, zwischen jeweiligen gemessenen Referenz-Lichtverteilungen zu interpolieren und dadurch eine Approximation der räumlichen Lichtverteilung bei einem bestimmten Wert des Optikeinstellparameters zu bestimmen. Insbesondere kann es vorgesehen sein, dass die Berechnungseinrichtung zum Ermitteln einer Approximation der erzeugbaren bzw. erzeugten räumlichen Lichtverteilung ausschließlich Additionen und/oder Subtraktionen durchführt, so dass die Ermittlung schnell und einfach, insbesondere in Echtzeit, erfolgen kann.

Ferner kann der einstellbare Parameter, unter dessen Berücksichtigung die Berechnungseinrichtung die Ermittlung der erzeugbaren räumlichen Lichtverteilung durchführen kann, eine Einstellung des Scheinwerfers bzw. einer Beleuchtungsreinrichtung des Scheinwerfers betreffen, insbesondere eine von dem Scheinwerfer erzeugbare Helligkeit oder Farbe. Zum Anpassen solcher Einstellungen kann der Scheinwerfer eine steuerbare Beleuchtungseinrichtung aufweisen. Beispielsweise kann ein Scheinwerfer in Abhängigkeit von einer Ansteuerung einer solchen Beleuchtungseinrichtung dazu ausgebildet sein, Licht lediglich mit einer Auswahl aus mehreren Leuchtmitteln oder Licht in verschiedenen Farben zu erzeugen, so dass sich insbesondere eine mittels des Scheinwerfersystems über die Optikkomponente erzeugbare räumliche Farb- oder Spektralverteilung in Abhängigkeit von einer Einstellung der Beleuchtungseinrichtung verändern kann. Auch ein eingestellter Wert eines derartigen Lichteinstellparameters kann somit bei der Ermittlung der erzeugbaren räumlichen Lichtverteilung berücksichtigt werden, um möglichst präzise Daten gewinnen und weitergeben zu können.

Bei einigen Ausführungsformen kann der Scheinwerfer eine Mehrzahl von Leuchtmitteln, insbesondere eine Mehrzahl von Leuchtdioden aufweisen, wobei für jedes Leuchtmittel ein Aktivierungszustand und/oder für eine Gruppe von Leuchtmitteln ein gemeinsamer Aktivierungszustand einstellbar sein kann, wobei der einstellbare Aktivierungszustand eines jeden Leuchtmittels beispielsweise einen eingeschalteten Zustand, einen ausgeschalteten Zustand, einen eingeschalteten Zustand mit ausgewählter (hoher oder geringer) Helligkeit und/oder einen eingeschalteten Zustand mit ausgewähltem Emissionsspektrum umfassen kann, und wobei die Berechnungseinrichtung dazu ausgebildet sein kann, die von der Optikkomponente erzeugbare räumliche Lichtverteilung in Abhängigkeit von den eingestellten Aktivierungszuständen der Leuchtmittel zu ermitteln.

Bei derartigen Scheinwerfern kann das Emissionsspektrum beispielsweise indirekt räumlich beeinflusst werden, indem eine bestimmte Auswahl von Leuchtmitteln eingeschaltet wird, während die anderen Leuchtmittel ausgeschaltet werden. Solche Einstellungen des Scheinwerfers können somit unmittelbaren Einfluss auf die von der Optikkomponente erzeugbare räumliche Lichtverteilung haben. Ferner kann insbesondere eine erzeugbare räumliche Farb- oder Spektralverteilung von den jeweiligen Emissionsspektren der einzelnen Leuchtmittel abhängen. Indem die Berechnungseinrichtung zum Berücksichtigen solcher Einstellungen des Scheinwerfers bei der Ermittlung der räumlichen Lichtverteilung ausgebildet sein kann, können folglich möglichst exakte Daten über die tatsächlich erzeugbare räumliche Lichtverteilung ermittelt und beispielsweise bei der Postproduktion berücksichtigt werden. Dabei kann grundsätzlich jedes der Leuchtmittel einzeln ansteuerbar und in einen gewünschten Aktivierungszustand versetzbar sein, während es auch möglich ist, die Leuchtmittel der Beleuchtungseinrichtung in mehrere Gruppen unterteilt vorzusehen, wobei für die Leuchtmittel einer Gruppe ein gemeinsamer Aktivierungszustand einstellbar sein kann. Eine derartige Gruppe von Leuchtmitteln kann beispielsweise mehrere oder sämtliche Leuchtmittel desselben Farbkanals, und/oder sämtliche Leuchtmittel einer elektrischen Reihenschaltung oder Parallelschaltung (gemeinsame Ansteuerung) umfassen.

Bei einigen Ausführungsformen kann das Scheinwerfersystem eine Schnittstelle aufweisen, die dazu ausgebildet ist, die berechnete räumliche Lichtverteilung auszugeben, insbesondere drahtlos oder drahtgebunden.

Die Ermittlung der erzeugbaren bzw. erzeugten räumlichen Lichtverteilung kann insbesondere gemäß dem nachstehend noch separat erläuterten Verfahren erfolgen.

Bei einigen Ausführungsformen können bzw. kann in dem Speicher eine Artikelnummer, eine Seriennummer, ein Halbstreuwinkel und/oder ein Lichtstärkewert der Optikkomponente gespeichert sein. Der Speicher kann folglich neben der Information über die erzeugbare räumliche Lichtverteilung weitere Daten umfassen, um möglichst vollständige Lichtdaten über das Scheinwerfersystem und insbesondere die koppelbare Optikkomponente zur Verfügung stellen zu können. Insbesondere kann der Speicher dabei über eine oder mehrere Schnittstellen auch dann direkt von einer externen Einrichtung auslesbar sein, wenn innerhalb des Scheinwerfersystems eine Ermittlung der erzeugbaren räumlichen Lichtverteilung erfolgt und deren Ergebnis nach außen übermittelt wird.

Ferner kann die gespeicherte Information eine räumliche Verteilung von mittels der Optikkomponente erzeugbaren Farbanpassungen umfassen. Es kann somit nicht ausschließlich eine Information über eine erzeugbare räumliche Farb- oder Spektralverteilung in dem Speicher gespeichert sein, sondern es können auch etwaige Farbanpassungen bzw. Veränderungen des Emissionsspektrums des Scheinwerfers bei einem Koppeln der Optikkomponente nachvollziehbar sein. Die Kenntnis über solche, beispielsweise durch Reflexionseigenschaften der Optikkomponente bedingte Farbveränderungen, die insbesondere auch eine räumliche Abhängigkeit aufweisen können, kann es ermöglichen, Korrekturen durch angepasste Einstellungen des Scheinwerfers bereits vor einer Aufnahme vorzunehmen, um eine gewünschte Farbverteilung zu erhalten.

Bei einigen Ausführungsformen kann der Scheinwerfer eine Koppeleinrichtung aufweisen und die Optikkomponente kann einen Koppelabschnitt aufweisen, wobei die Optikkomponente über den Koppelabschnitt an der Koppeleinrichtung des Scheinwerfers lösbar befestigbar sein kann. Beispielsweise kann die Koppeleinrichtung einen Steck-Verbinder, einen Dreh-Verbinder, einen Steck-Dreh-Verbinder und/oder einen Schiebe-Verbinder aufweisen, wobei der Koppelabschnitt das Gegenstück dazu aufweisen kann. Gleichermaßen ist eine umgekehrte Ausbildung von Koppeleinrichtung und Koppelabschnitt möglich. Dabei kann zwischen der Koppeleinrichtung und dem Koppelabschnitt ein Formschluss und/oder ein Kraftschluss vorgesehen sein. Durch eine derartige Koppeleinrichtung und einen derartigen Koppelabschnitt kann eine zuverlässige mechanische Verbindung zwischen dem Scheinwerfer und der Optikkomponente bewirkt werden.

Ferner kann das Scheinwerfersystem mehrere verschiedene Optikkomponenten umfassen, von denen wahlweise eine jeweilige mit dem Scheinwerfer gekoppelt werden kann. Insbesondere kann die vorstehend genannte Koppeleinrichtung dazu vorgesehen sein, schnell und flexibel eine ausgewählte Optikkomponente mit dem Scheinwerfer zu koppeln, um eine gewünschte räumliche Lichtverteilung erzeugen zu können. Dabei kann die von der gekoppelten Optikkomponente erzeugbare räumliche Lichtverteilung anhand der gespeicherten Information ermittelt und beispielsweise der Postproduktion zur Verfügung gestellt werden.

Die Erfindung betrifft gemäß einem weiteren Aspekt eine Optikkomponente für einen Scheinwerfer zum Beleuchten einer Film- oder Bühnenumgebung, wobei die Optikkomponente dazu ausgebildet ist, mit einem zum Erzeugen von Licht ausgebildeten Scheinwerfer gekoppelt zu werden und zumindest eine räumliche Lichtverteilung zu erzeugen, wobei die Optikkomponente einen Speicher aufweist, in dem eine Information über die von der Optikkomponente erzeugbare räumliche Lichtverteilung gespeichert ist. Die gespeicherte Information repräsentiert dabei eine von der Optikkomponente erzeugbare räumliche Helligkeitsverteilung und/oder räumliche Farb- oder Spektralverteilung.

Eine solche Optikkomponente ermöglicht es folglich, wie vorstehend für das Scheinwerfersystem erläutert, die mittels der Optikkomponente erzeugbare räumliche Lichtverteilung bei Kopplung mit einem Scheinwerfer anhand der in dem Speicher gespeicherten Informationen zu ermitteln. Somit kann eine solche Optikkomponente die insbesondere für die Postproduktion gewünschten Daten hinsichtlich der räumlichen Lichtverteilung direkt oder indirekt zur Verfügung stellen.

Bei einigen Ausführungsformen kann die Optikkomponente eine Schnittstelle aufweisen, über welche der Speicher auslesbar ist. Insbesondere kann eine solche Schnittstelle dazu ausgebildet sein, bei einem Koppeln der Optikkomponente mit einem Scheinwerfer eine Verbindung zwischen dem Speicher und innerhalb des Scheinwerfers angeordneten Einrichtungen herzustellen, beispielsweise einer Berechnungseinrichtung zum Ermitteln der erzeugbaren räumlichen Lichtverteilung anhand der Information. Ferner kann die Schnittstelle dazu vorgesehen sein, die in dem Speicher gespeicherte Information oder hieraus abgeleitete Werte unmittelbar oder über den Scheinwerfer und eine weitere Schnittstelle nach außen übertragen zu können, beispielsweise an eine externe Datensammeleinrichtung.

Bei einigen Ausführungsformen kann die von der Optikkomponente erzeugbare räumliche Lichtverteilung durch Einstellen des Werts eines Optikeinstellparameters veränderbar sein. Insbesondere kann dabei ein Halbstreuwinkel der Optikkomponente veränderbar sein, wozu beispielsweise der Abstand einer (Stufen-) Linse der Optikkomponente zu einem Leuchtmittel eines Scheinwerfers in gekoppeltem Zustand anpassbar sein kann. Dazu können die Optikkomponente und/oder der Scheinwerfer eine Verstelleinrichtung aufweisen, welche händisch betätigbar oder über eine Steuereinrichtung des Scheinwerfers oder der Optikkomponente steuerbar sein kann. Ferner kann die Information beispielsweise eine Rechenvorschrift zur Ermittlung der erzeugbaren räumlichen Lichtverteilung in Abhängigkeit von dem Optikeinstellparameter umfassen, wie vorstehend im Zusammenhang mit dem Scheinwerfersystem bereits erläutert.

Bei einigen Ausführungsformen kann die Optikkomponente eine Berechnungseinrichtung aufweisen, welche dazu ausgebildet ist, die von der Optikkomponente erzeugbare räumliche Lichtverteilung anhand der in dem Speicher gespeicherten Information zumindest näherungsweise zu ermitteln. Insbesondere kann die Berechnungseinrichtung dazu ausgebildet sein, die erzeugbare räumliche Lichtverteilung in Abhängigkeit von einem veränderbaren Wert eines Optikeinstellparameters der Optikkomponente, insbesondere einem Halbstreuwinkel, zu ermitteln. Dabei kann die Information beispielsweise eine Approximation der erzeugbaren räumlichen Lichtverteilung in Abhängigkeit von dem Optikeinstellparameter und insbesondere die bereits genannten Polynominterpolationen umfassen, anhand derer die Ermittlung durch die Berechnungseinrichtung erfolgen kann.

Ferner kann die Berechnungseinrichtung bei einigen Ausführungsformen dazu ausgebildet sein, Daten von einem gekoppelten Scheinwerfer zu empfangen und bei der Ermittlung der erzeugbaren räumlichen Lichtverteilung zu berücksichtigen. Beispielsweise kann die gekoppelte Optikkomponente über eine Schnittstelle Daten von dem Scheinwerfer empfangen bzw. mit dem Scheinwerfer austauschen, so dass bei der Ermittlung der erzeugbaren räumlichen Lichtverteilung beispielsweise eine Helligkeits- oder Farbeinstellung des Scheinwerfers berücksichtigt werden kann.

Die Berechnungseinrichtung kann dazu ausgebildet sein, die berechnete räumliche Lichtverteilung an den gekoppelten Scheinwerfer zu übermitteln. Auch dies kann insbesondere über die bereits genannte Schnittstelle erfolgen. Die erzeugbare räumliche Lichtverteilung bzw. deren Ermittlung kann somit zunächst von der Optikkomponente an den gekoppelten Scheinwerfer übertragen werden und damit aus der Optikkomponente herausgelangen. Dadurch kann die erzeugbare räumliche Lichtverteilung beispielsweise zusammen mit sonstigen von dem Scheinwerfer nach außen übermittelten Daten in einem gemeinsamen Datensatz übertragen werden. Insbesondere können in einem EULUMDAT-Format oder in einem ähnlichen Format zu übertragende Lichtverteilungsdaten dazu mit den weiteren Daten in einem umfassenderen Datenformat, beispielsweise dem Material Exchange Format (MXF), kombiniert werden. Ferner kann es vorgesehen sein, dass die berechnete räumliche Lichtverteilung über eine Schnittstelle direkt an eine externe Einrichtung übermittelbar ist.

Die Optikkomponente kann bei einigen Ausführungsformen einen Koppelabschnitt aufweisen, über welchen die Optikkomponente an dem Scheinwerfer lösbar befestigbar ist. Dies ermöglicht es, die Optikkomponente flexibel als Wechseloptik mit verschiedenen Scheinwerfern zu verwenden und beispielsweise auch als Leihgerät zur Verfügung zu stellen, wobei die jeweilige erzeugbare räumliche Lichtverteilung durch die in dem Speicher gespeicherte Information jederzeit und für jeden Scheinwerfer abrufbar sein kann.

Bei einigen Ausführungsformen können bzw. kann in dem Speicher eine Artikelnummer, eine Seriennummer, ein Halbstreuwinkel und/oder ein Lichtstärkewert der Optikkomponente gespeichert sein. Auch diese Daten können folglich bereitgestellt werden.

Die vorstehend im Zusammenhang mit dem Scheinwerfersystem genannten Ausführungsformen und Anwendungen der Optikkomponente sind auch für die isoliert beanspruchte Optikkomponente möglich.

Ferner bezieht sich die Erfindung gemäß einem weiteren Aspekt auch generell auf eine Optikkomponente für einen Scheinwerfer zum Beleuchten einer Film- oder Bühnenumgebung, wobei die Optikkomponente dazu ausgebildet ist, mit einem zum Erzeugen von Licht ausgebildeten Scheinwerfer gekoppelt zu werden, wobei die Optikkomponente einen Speicher aufweist, in dem eine Artikelnummer, eine Seriennummer, ein Halbstreuwinkel und/oder ein Lichtstärkewert der Optikkomponente gespeichert sind/ist. Hierbei dient der auslesbare Speicher folglich nicht unbedingt zum Speichern einer Information über die von der Optikkomponente erzeugbare räumliche Lichtverteilung, sondern kann alternativ oder zusätzlich auch andere Informationen aufnehmen und wiedergeben. Dies kann sich insbesondere bei als Wechseloptiken für einen Scheinwerfer verwendeten Optikkomponenten als vorteilhaft erweisen, um Daten über eine jeweilige gekoppelte Optikkomponente zur Verfügung stellen zu können. Die vorstehend im Zusammenhang mit dem Scheinwerfersystem genannten Ausführungsformen und Anwendungen der Optikkomponente (z.B. Ausgestaltung des Speichers und der Schnittstelle) sind auch für eine solche Optikkomponente generell möglich.

Ferner bezieht sich die Erfindung gemäß einem weiteren Aspekt auf einen Scheinwerfer zum Erzeugen von Licht zum Beleuchten einer Film- oder Bühnenumgebung, mit einer Koppeleinrichtung, mittels derer zumindest eine austauschbare Optikkomponente zum Erzeugen zumindest einer räumlichen Lichtverteilung mit dem Scheinwerfer koppelbar ist, und mit einer Leseeinrichtung, welche dazu ausgebildet ist, eine Information über die von der Optikkomponente erzeugbare räumliche Lichtverteilung aus einem Speicher der gekoppelten Optikkomponente auszulesen.

Ein solcher Scheinwerfer kann es ermöglichen, eine von einer koppelbaren Optikkomponente erzeugbare räumliche Lichtverteilung anhand der in dem Speicher der Optikkomponente gespeicherten Information zu ermitteln, insbesondere durch Auslesen aus dem Speicher über die Leseeinrichtung, so dass die ermittelte Lichtverteilung in weiteren Schritten einer Filmaufnahme bzw. -bearbeitung berücksichtigt werden kann. So kann der Scheinwerfer beispielsweise mit einer Berechnungseinrichtung ausgestattet sein, welcher die in dem Speicher der Optikkomponente gespeicherte Information zur Verfügung gestellt werden kann und welche dazu ausgebildet sein kann, die jeweilige erzeugbare räumliche Lichtverteilung für eine Vielzahl wahlweise mit dem Scheinwerfer koppelbarer Optikkomponenten anhand der übertragenen Information zu ermitteln.

Dabei kann es vorgesehen sein, dass der Scheinwerfer eine Schnittstelle aufweist, die dazu ausgebildet ist, die ausgelesene Information oder hieraus abgeleitete Werte auszugeben. Die ausgelesene Information oder daraus abgeleitete Werte, beispielsweise ein Ergebnis einer Berechnung, können somit nach außen bzw. an externe Einrichtungen ausgegeben werden.

Bei einigen Ausführungsformen kann der Scheinwerfer, wie bereits erwähnt, eine Berechnungseinrichtung aufweisen, welche dazu ausgebildet ist, die erzeugbare räumliche Lichtverteilung anhand der ausgelesenen Information zumindest näherungsweise zu ermitteln. Beispielsweise kann die Information eine Rechenvorschrift umfassen, anhand derer die Berechnungseinrichtung eine Berechnung durchführen kann. Insbesondere kann dabei auf die vorstehend beschriebene Approximation, beispielsweise Polynominterpolationen umfassend, zurückgegriffen werden.

Ferner kann die Berechnungseinrichtung dazu ausgebildet sein, die erzeugbare räumliche Lichtverteilung unter Berücksichtigung eines einstellbaren Werts zumindest eines Lichteinstellparameters des Scheinwerfers zu ermitteln, insbesondere eines Helligkeitswertes oder eines Farbwertes. Entsprechend kann neben der gekoppelten Optikkomponente auch der Einfluss einer Einstellung des Scheinwerfers auf die erzeugbare räumliche Lichtverteilung bei der Ermittlung berücksichtigt werden.

Der Scheinwerfer kann eine Beleuchtungseinrichtung aufweisen. Bei einigen Ausführungsformen kann der Scheinwerfer bzw. dessen Beleuchtungseinrichtung eine Mehrzahl von Leuchtmitteln, insbesondere eine Mehrzahl von Leuchtdioden, aufweisen, wobei für jedes Leuchtmittel ein Aktivierungszustand und/oder für eine Gruppe von Leuchtmitteln ein gemeinsamer Aktivierungszustand einstellbar sein kann, wobei der einstellbare Aktivierungszustand eines jeden Leuchtmittels einen eingeschalteten Zustand, einen ausgeschalteten Zustand, einen eingeschalteten Zustand mit ausgewählter Helligkeit und/oder einen eingeschalteten Zustand mit ausgewähltem Emissionsspektrum umfassen kann, und wobei die Berechnungseinrichtung dazu ausgebildet sein kann, die erzeugbare räumliche Lichtverteilung in Abhängigkeit von den eingestellten Aktivierungszuständen der Leuchtmittel zu ermitteln. Insbesondere kann durch eine solche Mehrzahl von Leuchtmitteln bereits durch den Scheinwerfer selbst veränderbares Licht erzeugt werden, wodurch entsprechend auch die erzeugbare räumliche Lichtverteilung beim Koppeln einer Optikkomponente mit dem Scheinwerfer beeinflusst werden kann. Folglich kann es die Berücksichtigung der eingestellten Aktivierungszustände der Leuchtmittel ermöglichen, möglichst exakte Daten über die erzeugte bzw. erzeugbare räumliche Lichtverteilung für Scheinwerfer solch flexibel einstellbarer Art zu gewinnen.

Ferner kann die Berechnungseinrichtung dazu ausgebildet sein, die erzeugbare räumliche Lichtverteilung unter Berücksichtigung eines einstellbaren Wertes zumindest eines Optikeinstellparameters der gekoppelten Optikkomponente zu ermitteln. Dazu kann der Scheinwerfer beispielsweise einen Sensor aufweisen, mittels dessen der Wert eines Optikeinstellparameters der gekoppelten Optikkomponente ermittelt werden kann. Beispielsweise kann mittels eines solchen Sensors der Abstand einer (Stufen-) Linse oder eines Reflektors zu den Leuchtmitteln des Scheinwerfers gemessen und daraus ein jeweiliger Halbstreuwinkel der gekoppelten Optik bestimmt werden, so dass dieser Halbstreuwinkel oder der gemessene Abstand als Optikeinstellparameter bei der Ermittlung der erzeugbaren räumlichen Lichtverteilung berücksichtigt werden kann.

Die im Zusammenhang mit dem Scheinwerfersystem genannten Ausführungsformen und Anwendungen des Scheinwerfers sind generell auch für den vorstehend isoliert beanspruchten Scheinwerfer möglich.

Die Erfindung bezieht sich gemäß einem weiteren Aspekt auch auf einen Scheinwerfer zum Erzeugen von Licht zum Beleuchten einer Film- oder Bühnenumgebung mit einer Koppeleinrichtung, mittels derer zumindest eine austauschbare Optikkomponente zum Erzeugen zumindest einer räumlichen Lichtverteilung mit dem Scheinwerfer koppelbar ist, und mit einem Speicher, in welchem eine Information über die von der Optikkomponente erzeugbare räumliche Lichtverteilung gespeichert ist.

Insbesondere können in dem Speicher jeweilige Informationen über die erzeugbaren räumlichen Lichtverteilungen für eine Vielzahl koppelbarer Optikkomponenten gespeichert sein. Dabei kann eine jeweilige gekoppelte Optikkomponente identifizierbar sein, sodass die der gekoppelten Optikkomponente zugeordnete Information zum Ermitteln der räumlichen Lichtverteilung ausgelesen werden kann.

Dazu kann der Scheinwerfer beispielsweise eine Erfassungseinrichtung aufweisen, welche dazu ausgebildet ist, die gekoppelte Optikkomponente zu identifizieren. Eine solche automatische Identifikation kann es ermöglichen, aus dem Speicher eine der jeweiligen gekoppelten Optikkomponente zugeordnete Information über die erzeugbare räumliche Lichtverteilung auszuwählen. Dazu kann die Optikkomponente beispielsweise mit einer Kodierung versehen sein, welche bei einem Koppeln der Optikkomponente mit dem Scheinwerfer automatisch durch die Erfassungseinrichtung auslesbar sein kann. Alternativ oder zusätzlich kann ein solcher Scheinwerfer eine Auswahleinrichtung aufweisen, mittels derer ein Benutzer die jeweilige gekoppelte Optikkomponente auswählen kann. Auch dadurch kann ein Auslesen der dieser Optikkomponente zugeordneten Information aus dem Speicher ermöglicht werden.

Auch für einen solchen Scheinwerfer mit Speicher sind die im Zusammenhang mit dem Scheinwerfersystem sowie im Zusammenhang mit dem Scheinwerfer mit einer Leseeinrichtung genannten Ausführungsformen und Anwendungen generell möglich.

Ferner betrifft die Erfindung gemäß einem weiteren Aspekt einen Scheinwerfer zum Erzeugen von Licht zur Beleuchtung einer Film- oder Bühnenumgebung, mit einer integrierten Optikkomponente zum Erzeugen zumindest einer räumlichen Lichtverteilung und mit einem Speicher, in welchem eine Information über die in der Optikkomponente erzeugbare räumliche Lichtverteilung gespeichert ist, wobei die gespeicherte Information eine von der Optikkomponente erzeugbare räumliche Helligkeitsverteilung und/oder räumliche Farb- oder Spektralverteilung repräsentiert. Hierbei ist die Optikkomponente dauerhaft in den Scheinwerfer integriert bzw. daran befestigt. Auch bei einem solchen Scheinwerfer, ohne Wechseloptik bzw. wahlweise koppel- oder lösbare Optikkomponente, kann die von der Optikkomponente erzeugbare räumliche Lichtverteilung somit anhand der gespeicherten Information ermittelt werden und es können Daten über die räumliche Lichtverteilung zur Verfügung gestellt werden.

Ferner kann der Scheinwerfer eine Schnittstelle aufweisen, die dazu ausgebildet ist, die gespeicherte Information oder hieraus abgeleitete Werte auszugeben. Über eine solche Schnittstelle kann folglich ein Lichtdatensatz aus dem Scheinwerfer ausgegeben werden.

Grundsätzlich kann es vorgesehen sein, dass die von der Optikkomponente des Scheinwerfers erzeugbare räumliche Lichtverteilung, abgesehen von etwaigen Einstellungen des Scheinwerfers wie dessen Helligkeit oder Farbe, dauerhaft festgelegt ist. Alternativ kann es bei einigen Ausführungsformen vorgesehen sein, dass die von der Optikkomponente erzeugbare räumliche Lichtverteilung durch Einstellen zumindest eines Optikeinstellparameters veränderbar ist. Dabei kann die gespeicherte Information eine Rechenvorschrift zur Ermittlung der erzeugbaren räumlichen Lichtverteilung in Abhängigkeit von dem eingestellten Wert des Optikeinstellparameters umfassen. Somit kann auch ein solcher Scheinwerfer mit integrierter Optikkomponente dazu vorgesehen sein, gezielt und wunschgemäß verschiedene räumliche Lichtverteilungen zu erzeugen und beispielsweise zwischen einer Spot-Einstellung und einer Flood-Einstellung zu wechseln. Die gespeicherte Information bzw. Rechenvorschrift kann es dabei ermöglichen, in jeder dieser auswählbaren Einstellungen die tatsächlich erzeugte bzw. erzeugbare räumliche Lichtverteilung für einen solchen Scheinwerfer mit integrierter Optikkomponente zu ermitteln.

Bei einigen Ausführungsformen kann der Scheinwerfer eine mit dem Speicher verbundene Berechnungseinrichtung aufweisen, welche dazu ausgebildet ist, die erzeugbare räumliche Lichtverteilung anhand der in dem Speicher gespeicherten Information zu ermitteln. Dabei kann die Information insbesondere eine Rechenvorschrift zum Berechnen der räumlichen Lichtverteilung, beispielsweise basierend auf einem physikalischen Modell, umfassen.

Ferner kann die Berechnungseinrichtung bei einigen Ausführungsformen dazu ausgebildet sein, die erzeugbare räumliche Lichtverteilung unter Berücksichtigung des Werts zumindest eines einstellbaren Parameters des Scheinwerfers zu ermitteln, insbesondere unter Berücksichtigung eines Wertes eines Optikeinstellparameters der Optikkomponente und/oder eines Wertes eines Lichteinstellparameters des Scheinwerfers, wie einer Helligkeitseinstellung und/oder einer Farbeinstellung. Insbesondere kann der Scheinwerfer eine Beleuchtungseinrichtung aufweisen, wobei deren Helligkeitseinstellung und/oder Farbeinstellung durch die Berechnungseinrichtung berücksichtigt werden können. Ferner kann die Berechnungseinrichtung dazu ausgebildet sein, beispielsweise einen veränderbaren Halbstreuwinkel der Optikkomponente bei der Ermittlung zu berücksichtigen. Die Information kann dazu beispielsweise eine Rechenvorschrift bzw. Approximation der erzeugbaren räumlichen Lichtverteilung in Abhängigkeit der zu berücksichtigenden Parameter umfassen.

Der Scheinwerfer kann eine Beleuchtungseinrichtung aufweisen, die insbesondere eine Mehrzahl von Leuchtmitteln umfassen kann. Insbesondere kann der Scheinwerfer eine steuerbare Beleuchtungseinrichtung aufweisen. Die Beleuchtungseinrichtung kann dabei insbesondere eine Mehrzahl von Leuchtmitteln, insbesondere eine Mehrzahl von Leuchtdioden aufweisen. Auch deren Einstellung bzw. Aktivierungszustand kann bei einer Ermittlung der räumlichen Lichtverteilung berücksichtigt werden.

Die im Zusammenhang mit dem Scheinwerfersystem genannten Ausführungsformen und Anwendungen des Scheinwerfers und die im Zusammenhang mit dem Scheinwerfersystem genannten Ausführungsformen und Anwendungen der Optikkomponente sind generell auch für den Scheinwerfer mit integrierter Optikkomponente möglich.

Die Erfindung betrifft gemäß einem weiteren Aspekt ein Verfahren zum Ermitteln einer räumlichen Lichtverteilung eines Scheinwerfersystems, das einen Scheinwerfer zum Erzeugen von Licht zur Beleuchtung einer Film- oder Bühnenumgebung und eine Optikkomponente zum Erzeugen zumindest einer räumlichen Lichtverteilung - insbesondere wie hierin offenbart - umfasst, wobei die räumliche Lichtverteilung von einem eingestellten Wert zumindest eines Einstellparameters des Scheinwerfersystems abhängt, wobei der eingestellte Wert des zumindest einen Einstellparameters ermittelt wird, und wobei eine Approximation der bei dem eingestellten Wert des Einstellparameters erzeugbaren räumlichen Lichtverteilung anhand einer Rechenvorschrift und/oder einer Nachschlagetabelle ermittelt wird.

Bei diesem Verfahren kann die Optikkomponente austauschbar oder in den Scheinwerfer integriert sein, wie vorstehend jeweils für verschiedene Ausführungsformen erläutert; in beiden Fällen wird nun vereinfachend auf ein "Scheinwerfersystem" Bezug genommen.

Dabei kann das Ermitteln des Wertes des Einstellparameters zum Beispiel ein Auslesen aus einem Sensor, aus einem Signaleingang oder aus einem Speicher umfassen. Prinzipiell kann dieses Ermitteln jedoch auch durch ein Erkennen eines in einem Simulationsprogramm zum Simulieren einer erzeugbaren räumlichen Lichtverteilung eingestellten Wertes oder eines mittels einer Steuereinrichtung des Scheinwerfers oder der Optikkomponente eingestellten Wertes erfolgen.

Mittels dieses Verfahrens kann somit eine Approximation der erzeugten bzw. erzeugbaren realen räumlichen Lichtverteilung ermittelt werden. Eine solche Approximation kann beispielsweise durch eine Berechnung erfolgen, wobei die Genauigkeit der Approximation beispielsweise von der verwendeten Rechenvorschrift oder etwaigen eingesetzten Parameterwerten abhängen kann. Ferner ist auch eine unmittelbar aus einer Nachschlagetabelle ausgelesene räumliche Lichtverteilung zumindest dahingehend als eine Approximation zu verstehen, als dass eine solche Tabelle beispielsweise diskrete Punkte im Raum umfassen kann, welchen ein Anteil der Lichtverteilung zugeordnet ist. Grundsätzlich kann eine solche Nachschlagetabelle dazu geeignet sein, die reale räumliche Lichtverteilung in einem vorgegebenen Binning (d.h. in einer vorgegebenen diskreten Werteverteilung) wiederzugeben, durch welches folglich eine Approximation der prinzipiell kontinuierlichen realen räumlichen Lichtverteilung erfolgt.

Eine solche Nachschlagetabelle kann beispielsweise basierend auf einer Messung der mittels der Optikkomponente erzeugbaren räumlichen Lichtverteilung in einem dem hier beanspruchten Verfahren vorgelagerten Kalibrierungsschritt erstellt und gespeichert worden sein. Eine Ermittlung der Approximation anhand einer Rechenvorschrift kann dabei insbesondere zur Ermittlung einer jeweiligen räumlichen Lichtverteilung bei solchen räumlichen Lichtverteilungen vorgesehen sein, die dynamisch in Abhängigkeit von einem Einstellparameter veränderbar sind, um ein sogenanntes Morphing zwischen diesen Lichtverteilungen zu ermöglichen. Dabei kann sich die Rechenvorschrift auf mehrere, beispielsweise gemessene, Referenz-Lichtverteilungen stützen und ein Morphing zwischen solchen Referenz-Lichtverteilungen zum Nähern der räumlichen Lichtverteilung für Werte des Einstellparameters zwischen den Referenz-Lichtverteilungen zugeordneten Referenzwerten ermöglichen. Somit können bei beliebigen Werten des Einstellparameters Daten über die erzeugbare räumliche Lichtverteilung ermittelt werden.

Die Approximation bzw. das Ergebnis der Approximation kann an eine externe Einrichtung, beispielsweise eine zentrale Datensammeleinrichtung, übermittelt bzw. an einer solchen Einrichtung gespeichert werden. Insbesondere kann die Approximation dabei im EULUMDAT-Format oder einem ähnlichen Format übertragen werden, oder die Approximation kann in einem umfassenderen Datenformat wie dem Material Exchange Format (MXF) mit weiteren Lichtdaten in einem gemeinsamen Datensatz übertragen werden. Die gewonnenen Lichtdaten können entsprechend in weiteren Bearbeitungsschritten im Zuge einer Filmaufnahme weiterverarbeitet bzw. berücksichtigt werden.

Wiederum kann die räumliche Lichtverteilung eine räumliche Helligkeitsverteilung und/oder eine räumliche Farb- oder Spektralverteilung repräsentieren.

Bei einigen Ausführungsformen kann der zumindest eine Einstellparameter einen Optikeinstellparameter der Optikkomponente, insbesondere einen Halbstreuwinkel der Optikkomponente, umfassen; und/oder der zumindest eine Einstellparameter kann einen Lichteinstellparameter des Scheinwerfers bzw. einer Beleuchtungseinrichtung des Scheinwerfers, insbesondere einen Aktivierungszustand einer Beleuchtungseinrichtung des Scheinwerfers, eine Helligkeitseinstellung des Scheinwerfers und/oder Farbeinstellung des Scheinwerfers, umfassen. Insbesondere eine Rechenvorschrift kann dabei ein Morphing zwischen den Lichtverteilungen für verschiedene Werte solcher Einstellparameter ermöglichen.

Wiederum kann der Einstellparameter auch einen Optikeinstellparameter umfassen, der unmittelbar eine Einstellung der Optikkomponente und beispielsweise einen Abstand zweier Linsen zueinander oder zumindest eines optischen Elementes wie einer Linse oder eines Reflektors zu einer Beleuchtungseinrichtung des Scheinwerfers betrifft. Insbesondere können charakteristische Winkel der Optikkomponente, beispielsweise ein Halbstreuwinkel und/oder ein Zehntelstreuwinkel und/oder ein "beam angle" bzw. Abstrahlwinkel, durch einen solchen Optikeinstellparameter, insbesondere einen Abstandswert, bestimmt oder bestimmbar sein, so dass auch hierdurch eine Abhängigkeit der räumlichen Lichtverteilung von solchen charakteristischen Winkeln wiedergegeben werden kann. Darüber hinaus können ein oder mehrere charakteristische(r) Winkel zusätzlich zu der Näherung der räumlichen Lichtverteilung bei einer bestimmten Einstellung der Optikkomponente berechnet und in einem gemeinsamen Datensatz ausgegeben werden.

Ferner kann der Einstellparameter eine Identifizierung einer gekoppelten austauschbaren Optikkomponente umfassen. Dadurch kann eine jeweilige gekoppelte Optikkomponente aus einer Vielzahl von koppelbaren Optikkomponenten identifiziert und eine Approximation der mittels dieser gekoppelten Optikkomponente erzeugbaren räumlichen Lichtverteilung ermittelt werden. Beispielsweise kann ein auslesbarer Speicher dazu eine jeweilige Nachschlagetabelle für mehrere oder jede der koppelbaren Optikkomponenten umfassen.

Bei einigen Ausführungsformen kann die Ermittlung der Approximation der räumlichen Lichtverteilung anhand der Rechenvorschrift lediglich Additionen, Subtraktionen und/oder Multiplikationen umfassen. Eine solche Rechenvorschrift kann folglich (im Unterschied etwa zu einer Division) ein äußerst einfaches Ermitteln der Approximation ermöglichen, so dass die erforderlichen Rechenschritte schnell durchgeführt und die Approximation in Echtzeit zur Verfügung gestellt werden kann.

Bei einigen Ausführungsformen kann die Nachschlagetabelle eine Mehrzahl von Approximationen für Referenz-Lichtverteilungen bei einer Mehrzahl jeweiliger Referenzwerte des Einstellparameters umfassen. Insbesondere können in einem vorgeschalteten Kalibrierungsschritt Referenz-Lichtverteilungen bei verschiedenen Werten des Einstellparameters gemessen werden, welche daraufhin in Tabellenform gespeichert und schließlich abgerufen werden können.

Die Rechenvorschrift kann bei einigen Ausführungsformen eine Vorschrift zur Interpolation zwischen einer ersten Referenz-Lichtverteilung bei einem ersten Referenzwert des Einstellparameters und einer zweiten Referenz-Lichtverteilung bei einem zweiten Referenzwert des Einstellparameters definieren. Beispielsweise können mehrere, insbesondere gemessene, Referenz-Lichtverteilungen bei jeweiligen Referenzwerten des Einstellparameters in einer oder mehreren Nachschlagetabellen gespeichert sein, wobei die Rechenvorschrift eine Interpolation zwischen solchen Referenz-Lichtverteilungen beschreiben kann. Dadurch kann, sofern ein Einstellparameter zwischen den Referenzwerten eingestellt bzw. ausgewählt wird, ein Morphing der Lichtverteilung erfolgen, um eine Approximation der erzeugbaren räumlichen Lichtverteilung bei dem jeweiligen Wert des Einstellparameters zu ermitteln. Insbesondere kann die Rechenvorschrift dabei eine lineare und entsprechend schnell und einfach durchzuführende Interpolation zwischen zwei Referenz-Lichtverteilungen definieren, anhand derer eine Approximation der erzeugbaren räumlichen Lichtverteilung bei einem Wert des Einstellparameters zwischen den Referenzwerten ermittelt werden kann.

Es kann vorgesehen sein, dass die Rechenvorschrift in einem Parametrisierungsschritt, der vor dem Schritt des Ermittelns der Approximation durchgeführt wird, basierend auf zumindest einer ersten Referenz-Lichtverteilung bei einem ersten Referenzwert des Einstellparameters und zumindest einer zweiten Referenz-Lichtverteilung bei einem zweiten Referenzwert des Einstellparameters ermittelt wird. Beispielsweise können eine erste und eine zweite Referenz-Lichtverteilung gemessen werden, wobei die Rechenvorschrift jeweilige Interpolationsvorschriften zwischen der ersten Referenz-Lichtverteilung und der zweiten Referenz-Lichtverteilung in Abhängigkeit von dem Wert des Einstellparameters umfasst. Insbesondere können dabei Polynominterpolationen für eine Mehrzahl von Raumpunkten ermittelt werden, die ein Morphing der räumlichen Lichtverteilung zwischen solchen Referenz-Lichtverteilungen ermöglichen. Die Parameter solcher Polynominterpolationen (Interpolationsparameter) können dabei gespeichert und in dem Berechnungsschritt verwendet werden, so dass durch Einsetzen des Wertes des Einstellparameters in die Polynominterpolationen eine jeweilige räumliche Lichtverteilung ermittelt werden kann.

Es kann vorgesehen sein, dass in dem Parametrisierungsschritt für eine Mehrzahl von vorgegebenen oder vorgebbaren Raumpunkten eine jeweilige Polynominterpolation zum Parametrisieren des auf den jeweiligen Raumpunkt auftreffenden Lichtes in Abhängigkeit von dem eingestellten Wert des Einstellparameters durchgeführt wird, wobei Interpolationsparameter der jeweiligen Polynominterpolation anhand der Referenz-Lichtverteilungen bestimmt werden können, und wobei die Rechenvorschrift die jeweiligen Polynominterpolationen für die Mehrzahl von Raumpunkten umfassen kann.

Bei einigen Ausführungsformen können die Referenz-Lichtverteilungen in dem Parametrisierungsschritt in eine Mehrzahl von Wellenlängenbereichen unterteilt werden, und für eine Mehrzahl von vorgegebenen oder vorgebbaren Raumpunkten kann für jeden der Wellenlängenbereiche eine jeweilige Polynominterpolation zum Parametrisieren des auf den jeweiligen Raumpunkt auftreffenden Lichtes in Abhängigkeit von dem eingestellten Wert des Einstellparameters durchgeführt werden, wobei Interpolationsparameter der jeweiligen Polynominterpolation anhand der Referenz-Lichtverteilungen bestimmt werden können, und wobei die Rechenvorschrift die jeweiligen Polynominterpolationen für die Mehrzahl von Raumpunkten umfassen kann. Entsprechend kann an jedem der Mehrzahl von Raumpunkten eine jeweilige Polynominterpolation für jeden der Wellenlängenbereiche durchgeführt werden, so dass anhand der Polynominterpolationen eine Approximation der räumlichen Farb- oder Spektralverteilung ermittelt werden kann.

Die Parameter der Polynominterpolation und die jeweiligen Raumpunkte können bei einigen Ausführungsformen in einem Speicher gespeichert werden. Insbesondere kann der Speicher dabei Teil der Optikkomponente oder Teil des Scheinwerfers sein. In dem Schritt des Ermittelns der Approximation kann auf diesen Speicher zugegriffen werden, und die Approximation der räumlichen Lichtverteilung bei einem bestimmten Wert des Einstellparameters kann beispielsweise durch Einsetzen in die Polynominterpolationen ermittelt werden.

Das Verfahren kann grundsätzlich in dem Scheinwerfer, in der Optikkomponente oder außerhalb durchgeführt werden. Insbesondere kann das Ermitteln der Approximation beispielsweise durch eine Lichtsteuerungs- oder Lichtplanungs-App eines Mobilfunkgeräts bzw. Smartphones erfolgen.

Die im Zusammenhang mit dem erfindungsgemäßen Scheinwerfersystem genannten Verfahrensschritte sind generell auch für das vorstehend beschriebene Verfahren zum Ermitteln einer räumlichen Lichtverteilung eines Scheinwerfersystems möglich.

Ferner bezieht sich die Erfindung gemäß einem weiteren Aspekt auf ein Computerprogrammprodukt, welches Befehle umfasst, die einen Computer bei deren Ausführung dazu veranlassen, das vorstehend beschriebene Verfahren auszuführen.

Die Erfindung wird im Folgenden rein beispielhaft anhand von Ausführungsbeispielen unter Bezugnahme auf die Zeichnungen erläutert.

### Es zeigen:

- Fig. 1A bis 1G: eine Vorderansicht auf ein Scheinwerfersystem mit einem Scheinwerfer und einer Optikkomponente; eine Seitenansicht des Scheinwerfersystems; eine perspektivische Ansicht des Scheinwerfersystems bei von dem Scheinwerfer gelöster Optikkomponente; eine perspektivische Vorderansicht und eine perspektivische Rückansicht der Optikkomponente; sowie eine perspektivische Vorderansicht und eine perspektivische Rückansicht einer weiteren mit dem Scheinwerfer koppelbaren Optikkomponente,
- Fig. 2A bis 2D: jeweilige schematische Darstellungen eines Scheinwerfersystems mit einem Scheinwerfer zum Erzeugen von Licht und einer mit dem Scheinwerfer koppelbaren Optikkomponente zum Erzeugen einer räumlichen Lichtverteilung,
- Fig. 3: eine schematische Vorderansicht des Scheinwerfers bzw. dessen Beleuchtungseinrichtung,
- Fig. 4: eine schematische Darstellung eines Scheinwerfers mit integrierter Optikkomponente,
- Fig. 5: eine schematische Darstellung zur Veranschaulichung eines Verfahrens zum Ermitteln einer Approximation einer räumlichen Lichtverteilung eines Scheinwerfersystems in Abhängigkeit von einem veränderbaren Einstellparameter und
- Fig. 6: eine schematische Darstellung zur Veranschaulichung einer Ermittlung einer Rechenvorschrift mit Polynominterpolationen zum Ermitteln einer Approximation einer räumlichen Lichtverteilung eines Scheinwerfersystems in Abhängigkeit von einem veränderbaren Einstellparameter.

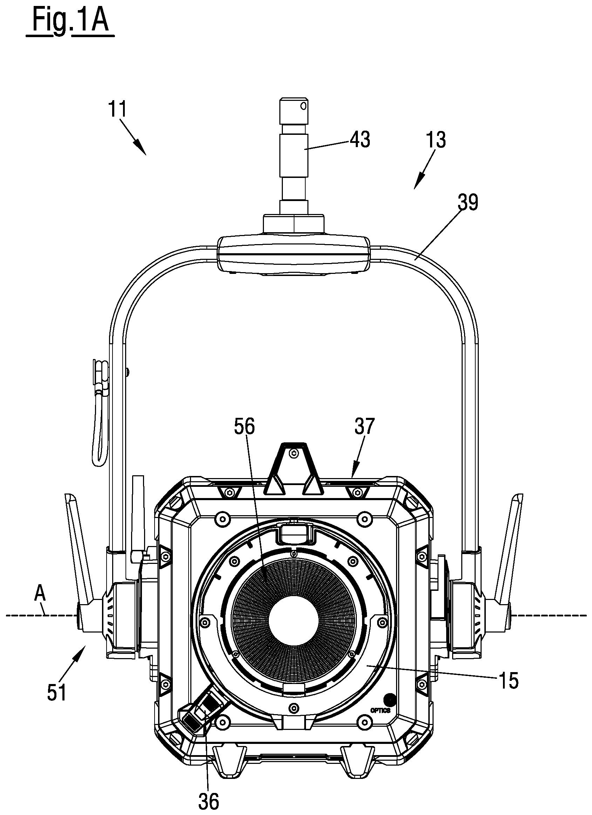

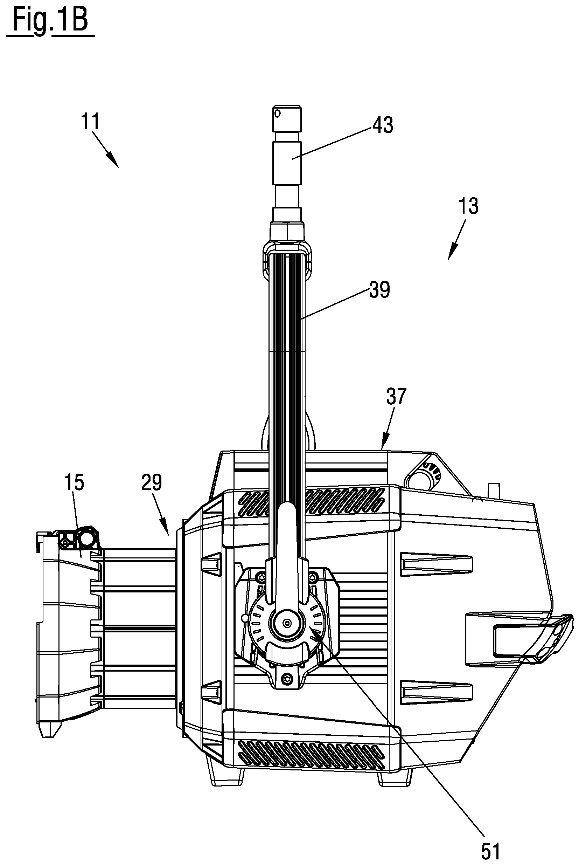

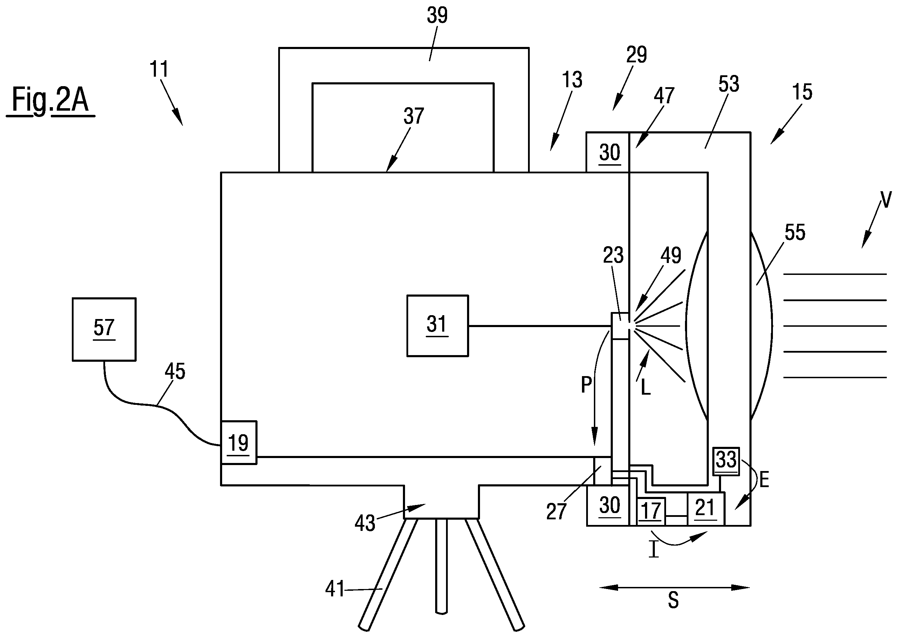

Fig. 1A und 1B zeigen ein Scheinwerfersystem 11 mit einem Scheinwerfer 13 und einer daran lösbar befestigten Optikkomponente 15. Der Scheinwerfer 13 weist einen Halteabschnitt 43 auf, über welchen der Scheinwerfer 13 insbesondere an einer Raumdecke, einer Wand, einem Gerüst oder einem Stativ 41 befestigt werden kann. Ferner umfasst der Scheinwerfer 13 einen Scheinwerferkörper 37, der auch als Tubus bezeichnet wird, sowie eine Beleuchtungseinrichtung 23, welche zum Erzeugen von Licht L und Aussenden des Lichtes L durch eine Lichtaustrittsöffnung 49 ausgebildet ist (vgl. auch Fig. 2A bis 2D, Fig. 3 und Fig. 4).

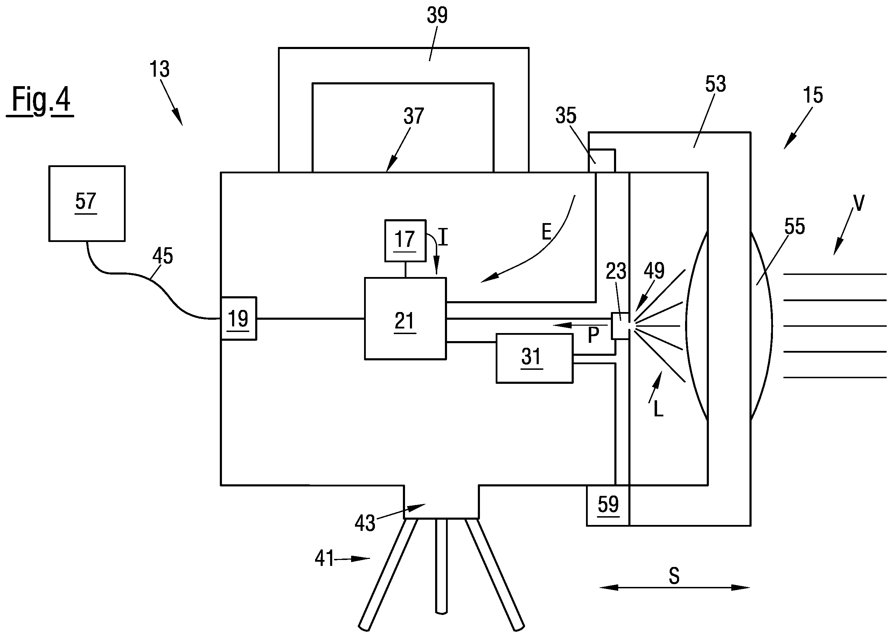

Um die Richtung des von dem Scheinwerfer 13 ausgesendeten Lichtes L einstellen und das Licht L beispielsweise auf einen zu beleuchtenden Gegenstand oder eine anzustrahlende Person fokussieren zu können, ist der Scheinwerferkörper 37 über eine Ausrichteinrichtung 51 und einen Griff 39 mit dem Halteabschnitt 43 gekoppelt. Diese Ausrichteinrichtung 51 ermöglicht es, den Scheinwerfer 13 um eine Schwenkachse A zu verschwenken und in einer gewünschten Auslenkung zu fixieren, um den Austrittswinkel des Lichts L bezüglich der Horizontalen einstellen zu können. Ferner kann der Scheinwerfer 13 eine Schnittstelle 19 mit einem daran angeschlossenen Kabel 45 aufweisen, über welches der Scheinwerfer 13 einerseits beispielsweise mit Strom versorgt werden kann, während diese Schnittstelle 19, insbesondere bei einer Ausbildung des Kabels 45 oder eines zusätzlichen Kabels als Ethernet-Kabel oder dergleichen, auch dazu dienen kann, Daten des Scheinwerfers 13 (insbesondere Gerätedaten, Betriebsdaten und/oder Einstelldaten) nach außen zu übermitteln (vgl. Fig. 2A bis 2D und Fig. 4).

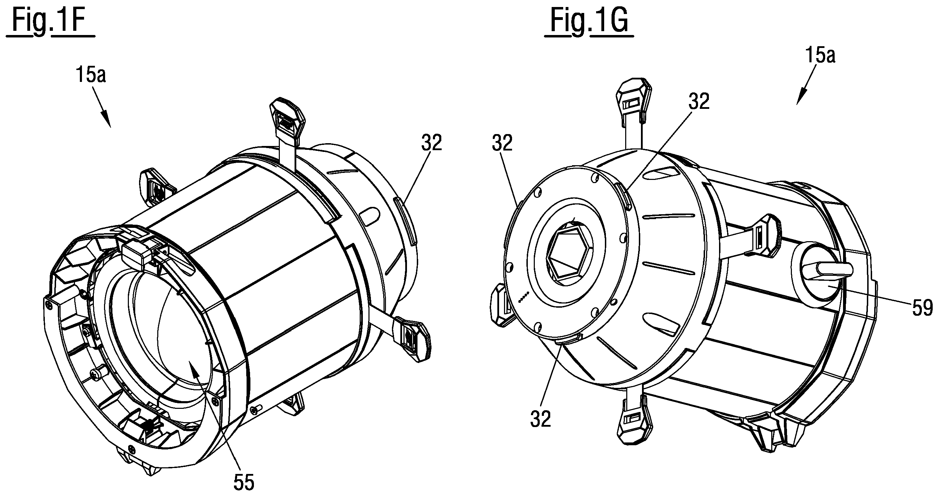

Die in den Fig. 1A und 1B mit dem Scheinwerfer 13 gekoppelte Optikkomponente 15 ist dazu vorgesehen, aus dem von dem Scheinwerfer 13 erzeugten Licht L eine räumliche Lichtverteilung V zu erzeugen (vgl. auch Fig. 2A bis 2D und Fig. 4). Dazu umfasst die Optikkomponente 15 einen Reflektor 56, wobei ein solcher Reflektor 56, wie bei der in den Fig. 1A bis 1D gezeigten Optikkomponente 15, insbesondere segmentiert ausgebildet sein kann. Ferner können solche Optikkomponenten 15 auch (Stufen-) Linsen 55 (vgl. auch Fig. 1F), Projektionslinsen, Streuscheiben oder Filter umfassen. Die Optikkomponente 15 ermöglicht es dabei, das von dem Scheinwerfer 13 bzw. dessen Beleuchtungseinrichtung 23 erzeugte Licht L gemäß einer geometrischen und/oder spektralen Lichtformungscharakteristik abzulenken und eine gewünschte räumliche Lichtverteilung V auf einer Fläche zu erzeugen.

Beispielsweise kann das Licht L mit Hilfe einer derartigen Optikkomponente 15 in einem verhältnismäßig engen Kreis oder in einer Ellipse gebündelt auf eine Fläche geworfen werden, um in einer solchen Spot-Einstellung einen bestimmten Bereich einer aufzunehmenden Szene zu beleuchten und von der Umgebung abzuheben, während es alternativ beispielsweise in einer Flood-Einstellung vorgesehen sein kann, mittels einer Optikkomponente 15 eine derartige räumliche Lichtverteilung V zu erzeugen, das eine möglichst große Fläche gleichmäßig und mit weichen Übergängen zu der unbeleuchteten Umgebung bestrahlt wird.

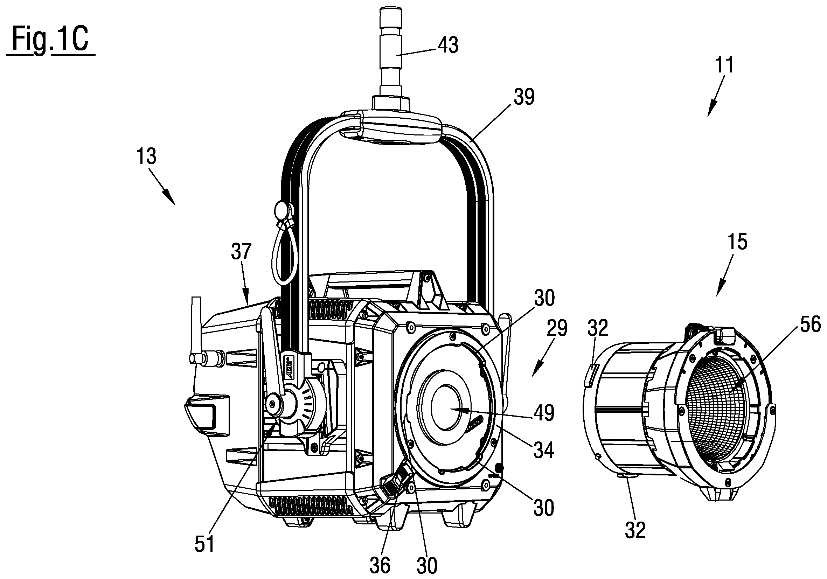

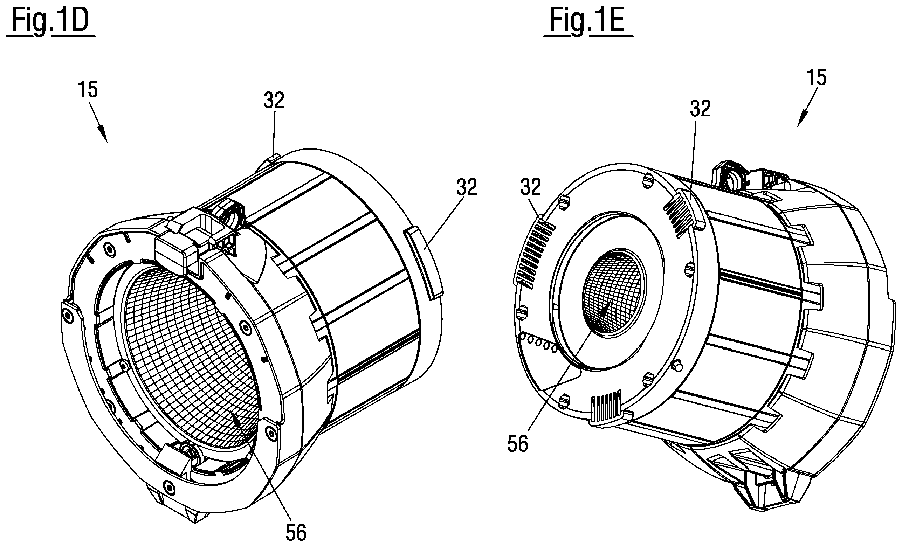

Wie Fig. 1C zeigt, ist die Optikkomponente 15 von dem Scheinwerfer 13 lösbar und folglich als Wechseloptik ausgebildet. Durch die Möglichkeit, Optikkomponenten 15 lösbar an dem Scheinwerfer 13 zu befestigen, können wahlweise verschiedene Optikkomponenten 15 oder 15a mit dem Scheinwerfer 13 gekoppelt werden, um eine jeweilige optimal an bestimmte Anforderungen angepasste räumliche Lichtverteilung V aus dem von dem Scheinwerfer 13 erzeugten Licht L erhalten zu können. Beispielhaft sind hier die Optikkomponenten 15 sowie eine weitere Optikkomponente 15a in den Figuren 1D bis 1G näher veranschaulicht.

Um die Optikkomponenten 15 zum Erzeugen einer räumlichen Lichtverteilung V und 15a mit dem Scheinwerfer 13 wahlweise verbinden zu können, weist der Scheinwerfer 13 an einer Vorderseite, an welcher das Licht L durch die Lichtaustrittsöffnung 49 austritt, eine Koppeleinrichtung 29 mit mehreren Koppelelementen 30 auf. Diese Koppelelemente 30 sind hier als Ausnehmungen in einem Ring 34 ausgebildet, in welche korrespondierende stegartige Koppelelemente 32 der Optikkomponenten 15 und 15a eingesetzt werden können. Durch darauffolgendes Verdrehen der zu koppelnden Optikkomponente 15 oder 15a können die Koppelelemente 32 der Optikkomponente 15 oder 15a durch den Ring 34 an dem Scheinwerfer 13 gesichert werden, so dass die Optikkomponenten 15 und 15a durch diese Steck-Dreh-Verbindung äußerst schnell mit dem Scheinwerfer 13 zum Erzeugen einer gewünschten räumlichen Lichtverteilung V gekoppelt werden können. Um die jeweilige gekoppelte Optikkomponente 15 oder 15a sicher an dem Scheinwerfer 13 zu fixieren und gleichsam ein schnelles und unkompliziertes Lösen der Optikkomponente 15 oder 15a, beispielsweise zum Wechseln der gekoppelten Optikkomponente 15 oder 15a, zu ermöglichen, weist der Scheinwerfer 13 einen ebenfalls an der Vorderseite angeordneten Lösemechanismus 36 auf. Dieser kann beispielsweise durch ein Drücken oder Schieben betätigbar sein, wobei die gekoppelte Optikkomponente 15 oder 15a erst infolge einer solchen Betätigung für ein Zurückdrehen und Lösen von dem Scheinwerfer 13 freigegeben und andernfalls an dem Scheinwerfer 13 gesichert sein kann.

Die Koppeleinrichtung 29 kann es somit ermöglichen, wahlweise eine der Optikkomponenten 15 und 15a oder auch sonstige, nicht gezeigte und andersartige Optikkomponenten 15 mit dem Scheinwerfer 13 zu koppeln. Dabei können die Optikkomponenten 15 jeweilige und insbesondere verschiedene Lichtformungscharakteristiken aufweisen, um eine wunschgemäße räumliche Lichtverteilung V erzeugen zu können.

Beispielhaft ist die in den Figuren 1D und 1E näher gezeigte Optikkomponente 15 (perspektivische Vorderansicht und Rückansicht) mit einem segmentierten Reflektor 56 ausgebildet. Alternativ zu einem feststehenden Reflektor 56 mit einem unveränderlichen (insbesondere "weichen") Lichtfeld kann vorgesehen sein, dass die mit dem Scheinwerfer 13 koppelbare Optikkomponente 15 beispielsweise bezüglich der optischen Achse bewegbar oder ausfahrbar ist, wobei die erzeugte räumliche Lichtverteilung V in Abhängigkeit von dieser Einstellung der Optikkomponente 15 veränderbar sein kann. Beispielsweise können durch eine solche Einstellung Werte eines Abstrahlwinkels des erzeugten Lichtstrahls von 15°, 30° und/oder 60° einstellbar sein. Insbesondere kann eine derartig ausgebildete Optikkomponente 15 mit einem Reflektor 56 dazu genutzt werden, verhältnismäßig weit entfernte Objekte mit zu den Rändern der beleuchteten Fläche hin kontinuierlich abnehmender Helligkeit anzustrahlen.

Die in den Fig. 1F und 1G gezeigte Optikkomponente 15a (perspektivische Vorderansicht und Rückansicht) weist alternativ zu einer Ausbildung mit einem Reflektor 56 eine Linse 55 auf, um beispielsweise einen zu beleuchtenden Bereich möglichst gleichmäßig bezüglich Helligkeit und Farbe ausleuchten zu können. Die Optikkomponente 15a ist dabei einstellbar, so dass beispielsweise ein Abstrahlwinkel bzw. ein Halbstreuwinkel der Optikkomponente 15a angepasst werden kann. Dazu ist an einer Außenseite der Optikkomponente 15a eine Verstelleinrichtung 59 in Form eines Drehknopfes vorgesehen, mittels dessen beispielsweise der Abstand der Linse 55 zu der Lichtaustrittsöffnung 49 veränderbar sein kann. Insbesondere kann die Optikkomponente 15a auch weitere, in Fig. 1F und 1G nicht sichtbare Linsen aufweisen und es können beispielsweise zwei mit festem Abstand zueinander angeordnete Linsen gemeinsam durch Betätigen der Verstelleinrichtung 59 verschiebbar sein, um die von der Optikkomponente 15a erzeugbare räumliche Lichtverteilung V anzupassen. Ferner kann es vorgesehen sein, die Abstrahlcharakteristik der Optikkomponente 15a durch Verändern des Abstandes mehrerer und insbesondere zweier Linsen zueinander anzupassen, wozu beispielsweise eine dieser Linsen mittels der Verstelleinrichtung 59 bewegbar sein kann. Insbesondere können bei einer derartigen Optikkomponente 15a Abstrahlwinkel von 15°, 25° und/oder 35° einstellbar sein.

Eine solche Einstellbarkeit der mit dem Scheinwerfer 13 koppelbaren Optikkomponenten 15 und 15a ermöglicht es folglich, die erzeugte räumliche Lichtverteilung V anpassen zu können, ohne die Optikkomponente 15 wechseln zu müssen. In entsprechender Weise kann alternativ zu dem hier gezeigten Scheinwerfersystem 11 mit Wechseloptiken auch vorgesehen sein, einen Scheinwerfer 13 mit integrierter Optikkomponente 15 auszubilden. Dabei kann die Optikkomponente 15 einstellbar sein, um die erzeugbare räumliche Lichtverteilung V flexibel anpassen zu können, während es auch möglich ist, einen Scheinwerfer 13 mit integrierter und fixierter Optikkomponente 15 auszubilden, so dass die erzeugbare räumliche Lichtverteilung V festgelegt ist.

Aufgrund des Einflusses einer Beleuchtung bzw. der Lichtverhältnisse auf eine aufzunehmende oder aufgenommene Szene besteht ein Bedarf, Daten über die von einer Optikkomponente 15 in Verbindung mit einem Scheinwerfer 13 erzeugte räumliche Lichtverteilung V beispielsweise in der Postproduktion berücksichtigen zu können, um beispielsweise die Möglichkeiten zur Nachbearbeitung einer Szene zu erweitern. Ferner kann es gewünscht sein, auf Basis solcher Daten bereits vor der Aufnahme einer Szene eine Simulation der Lichtverhältnisse durchzuführen, um optimale Einstellungen finden und unmittelbar bei Beginn eines Drehs anwenden zu können.

Um dies zu ermöglichen, sind ein im Folgenden anhand der Fig. 2A bis 2D beschriebenes Scheinwerfersystem 11 mit einem Scheinwerfer 13 und einer mit dem Scheinwerfer 13 koppelbaren Optikkomponente 15 sowie ein in Fig. 4 veranschaulichter Scheinwerfer 13 mit integrierter Optikkomponente 15 dazu ausgebildet, Daten über die von der jeweiligen Optikkomponente 15 erzeugbare räumliche Lichtverteilung V zu ermitteln und auszugeben.

Das in Fig. 2A schematisch dargestellte Scheinwerfersystem 11 umfasst einen Scheinwerfer 13, mit welchem eine Optikkomponente 15 lösbar gekoppelt ist. Dabei weist der Scheinwerfer 13 eine Koppeleinrichtung 29 mit Koppelelementen 30 auf, über welche die Optikkomponente 15 mit einem an einem Tragkörper 53 ausgebildeten Koppelabschnitt 47 mit dem Scheinwerfer 13 gekoppelt ist. Zwischen den Koppelelementen 30 und dem Koppelabschnitt 47 kann dazu beispielsweise eine Steck-Verbindung, eine Dreh-Verbindung, eine Dreh-Steck-Verbindung oder eine Schiebeverbindung, und insbesondere ein Form- und/oder Kraftschluss bestehen.

Durch diese lösbare Verbindung der Optikkomponente 15 mit dem Scheinwerfer 13 über die Koppeleinrichtung 29 kann eine Vielzahl verschiedener Optikkomponenten 15, die entsprechend als Wechseloptiken ausgebildet sein können, flexibel mit dem Scheinwerfer 13 gekoppelt werden. Ferner ist der Scheinwerfer 13 mit einem Griff 39 ausgebildet, so dass das Scheinwerfersystem 11 auf einfache Weise transportiert und an einem vorgesehenen Ort mittels des Stativs 41 positioniert werden kann.

Die Optikkomponente 15 weist hier eine Linse 55 auf, welche als Sammellinse ausgebildet ist und aus dem von einer Beleuchtungseinrichtung 23 erzeugten und durch eine Lichtaustrittsöffnung 49 austretenden Licht L eine räumliche Lichtverteilung V formt. Dabei wirkt die Linse 55 derart, dass isotrop von der Beleuchtungseinrichtung 23 emittiertes Licht L als im Wesentlichen parallelisierte Strahlung abgestrahlt wird, um beispielsweise einen Gegenstand oder eine Person fokussiert anstrahlen zu können. Diese Ausbildung der Optikkomponente 15 mit einer Linse 55 ist dabei jedoch rein beispielhaft und es können grundsätzlich beliebig ausgebildete Optikkomponenten 15 zum Erzeugen beliebiger räumlicher Lichtverteilungen V mit dem Scheinwerfer 13 als Bestandteil des Scheinwerfersystems 11 koppelbar sein.

Ferner weist die Optikkomponente 15 eine Steuereinrichtung 33 auf, welche dazu ausgebildet ist, die Optikkomponente 15 bzw. zumindest Teile derselben entlang einer Stellrichtung S zu bewegen und dadurch den Abstand zwischen der Linse 55 und der Lichtaustrittsöffnung 49 zu verändern. Beispielsweise kann die Steuereinrichtung 33 dazu mit einer elektrisch ansteuerbaren Verstelleinrichtung (z.B. Elektromotor oder sonstiger Aktor; nicht gezeigt) verbunden sein und selbst elektrisch, insbesondere über eine Funkverbindung, ansteuerbar sein. Alternativ zu der Steuereinrichtung 33 kann eine manuell betätigbare Verstelleinrichtung vorgesehen sein. Durch diesen Abstand kann dabei beispielsweise ein Halbstreuwinkel eingestellt werden, wobei die von der Optikkomponente 15 erzeugbare räumliche Lichtverteilung V von dem Halbstreuwinkel bzw. dem eingestellten Abstand als einem Optikeinstellparameter E abhängen kann.

Um Daten über die von der Optikkomponente 15 erzeugbare räumliche Lichtverteilung V zur Verfügung stellen zu können, weist die Optikkomponente 15 einen Speicher 17 auf, in welchem eine Information I über die von der Optikkomponente 15 erzeugbare räumliche Lichtverteilung V gespeichert ist. Dabei kann die Information I beispielsweise eine räumliche Helligkeitsverteilung und/oder eine räumliche Farb- oder Spektralverteilung betreffen, wobei die Information I beispielsweise auch einen Parameter der Optikkomponente 15 wie einen Halbstreuwinkel oder lediglich eine Identifikation der Optikkomponente 15 angeben kann.

Der Speicher 17 ist über eine Schnittstelle 27 mit dem Scheinwerfer 13 verbunden, wobei der Speicher 17 bei einem Koppeln der Optikkomponente 15 mit dem Scheinwerfer 13 automatisch mit der Schnittstelle 27 verbindbar und über diese auslesbar sein kann. Ferner ist die Schnittstelle 27 mit einer Schnittstelle 19 verbunden, an welcher ein Kabel 45 angeschlossen ist, so dass die in dem Speicher 17 gespeicherte Information I an eine externe Datensammeleinrichtung 57 übermittelt bzw. der Speicher 17 von der Datensammeleinrichtung 57 ausgelesen werden kann. Neben der Information I über die erzeugbare räumliche Lichtverteilung V können in dem Speicher 17 beispielsweise auch eine Artikelnummer, eine Seriennummer, ein Halbstreuwinkel und/oder ein Lichtstärkewert der Optikkomponente 15 gespeichert und auf diese Weise nach außen bzw. an die externe Datensammeleinrichtung 57 übermittelbar sein.

Wie vorstehend bereits erwähnt, kann die von der Optikkomponente 15 erzeugte räumliche Lichtverteilung V durch Bewegen der Linse 15 entlang der Stellrichtung S relativ zu der Lichtaustrittsöffnung 49 verändert werden. Folglich kann die von der Optikkomponente 15 erzeugbare räumliche Lichtverteilung V von einem durch eine solche Einstellung veränderbaren Optikeinstellparameter E, beispielsweise einem Halbstreuwinkel, abhängen.

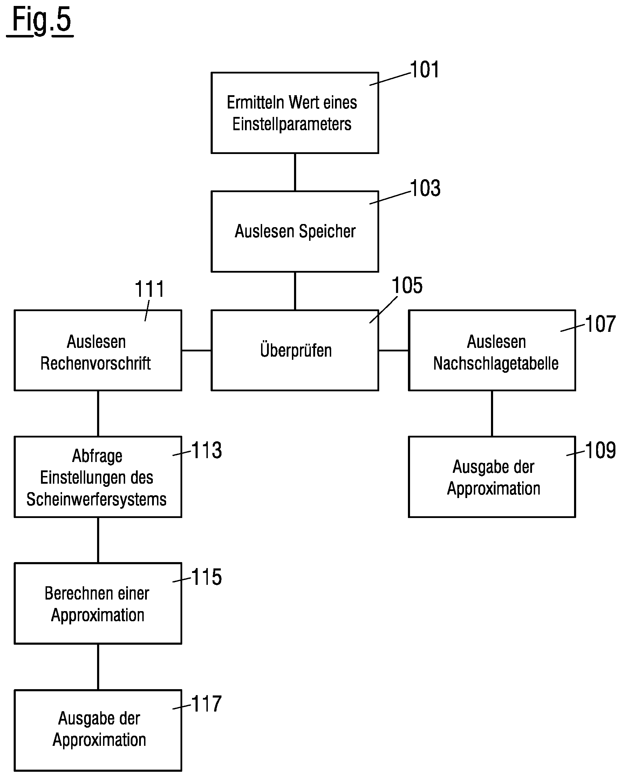

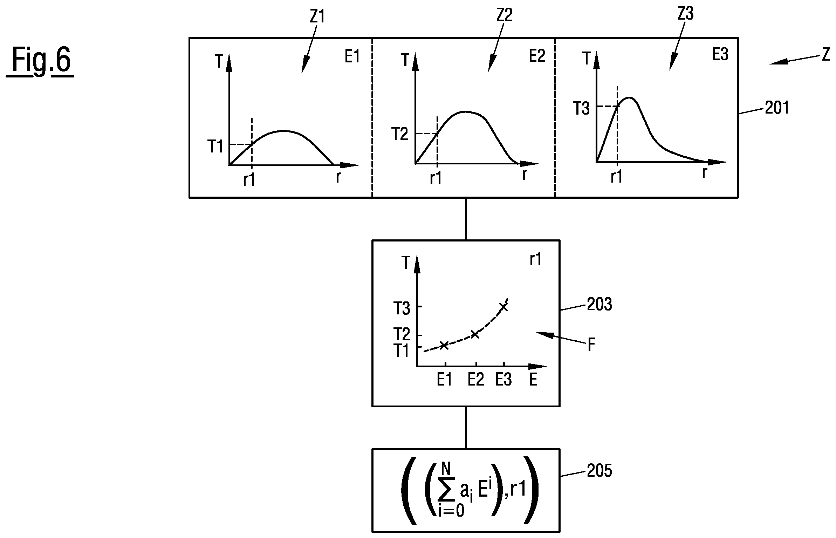

Um für eine derartige variabel einstellbare Optikkomponente 15 Daten über die jeweilige erzeugbare räumliche Lichtverteilung V in Abhängigkeit von dem eingestellten Wert des Optikeinstellparameters E gewinnen und ausgeben zu können, kann die in dem Speicher 17 gespeicherte Information I eine Approximation der räumlichen Lichtverteilung V in Abhängigkeit von dem eingestellten Wert des Optikeinstellparameters E ermöglichen. Beispielsweise kann die gespeicherte Information I eine Rechenvorschrift umfassen, die für eine Mehrzahl von Raumpunkten r zumindest eine jeweilige Polynominterpolation F umfassen kann, welche die Abhängigkeit eines Anteils T der erzeugbaren räumlichen Lichtverteilung V an einem jeweiligen Raumpunkt r1 von dem eingestellten Wert des Optikeinstellparameters E beschreibt, wie nachstehend im Zusammenhang mit dem durch die Fig. 5 und 6 veranschaulichten Verfahren zum Ermitteln einer Approximation der erzeugbaren räumlichen Lichtverteilung V näher erläutert ist. Ferner kann der Speicher 17 für eine Mehrzahl von Werten E1, E2, E3 des Optikeinstellparameters E eine jeweilige Nachschlagetabelle umfassen, anhand welcher die bei dem jeweiligen Wert E1, E2 oder E3 des Optikeinstellparameters E erzeugbare räumliche Lichtverteilung V ermittelt werden kann (vgl. auch Fig. 5 und 6).

Um eine solche Ermittlung bzw. Berechnung der räumlichen Lichtverteilung V in Abhängigkeit von dem Optikeinstellparameter E durchführen zu können, weist die Optikkomponente 15 eine mit dem Speicher 17 verbundene Berechnungseinrichtung 21 auf, welche beispielsweise als Mikroprozessor ausgebildet sein kann. Diese Berechnungseinrichtung 21 ist dabei auch mit der Steuereinrichtung 33 der Optikkomponente 15 verbunden, so dass ein eingestellter oder ausgewählter Wert des Optikeinstellparameters E ermittelt und bei einer Ermittlung der räumlichen Lichtverteilung V bzw. einer Approximation derselben durch die Berechnungseinrichtung 21 berücksichtigt werden kann. Die Steuereinrichtung 33 (oder eine stattdessen vorgesehene manuell betätigte Verstelleinrichtung) kann dazu beispielsweise einen Sensor umfassen, mittels dessen der Abstand der Linse 55 von der Lichtaustrittsöffnung 49 direkt oder indirekt bestimmt und dadurch als Optikeinstellparameter E von der Berechnungseinrichtung 21 berücksichtigt werden kann. Beispielsweise kann ein solcher Sensor als ein Absolut- oder Inkrementalpositionsgeber (Drehwinkel- oder linear sensierend) ausgebildet sein.

Eine Ermittlung einer Approximation der räumlichen Lichtverteilung V durch die Berechnungseinrichtung 21 kann dabei insbesondere ein Einsetzen des jeweiligen Wertes des Optikeinstellparameters E in die vorstehend erwähnten Polynominterpolationen F umfassen. Dies kann insbesondere ein Morphing zwischen verschiedenen räumlichen Lichtverteilungen V ermöglichen, bei welchem ausschließlich Additionen und Subtraktionen durchgeführt werden, so dass die berechnete Approximation der räumlichen Lichtverteilung V ohne großen Rechenaufwand erhalten werden kann. Ferner kann die Information auch andersartige Rechenvorschriften zum Ermitteln der Approximation umfassen, anhand welcher die Berechnungseinrichtung 21 die Approximation ermittelt. Solche Rechenvorschriften können beispielsweise auf physikalischen Modellen beruhen oder Vorschriften zur Interpolation zwischen verschiedenen, insbesondere gemessenen, Referenz-Lichtverteilungen Z umfassen. Beispielsweise kann es vorgesehen sein, eine Approximation der erzeugbaren räumlichen Lichtverteilung V für Werte des Optikeinstellparameters E zwischen Referenzwerten E1, E2, E3, für welche Referenz-Lichtverteilungen Z1, Z2, Z3 vorliegen, durch lineare Interpolation zwischen benachbarten Referenz-Lichtverteilungen Z1 und Z2 bzw. Z2 und Z3 zu ermitteln.

Auch die Berechnungseinrichtung 21 ist über die erste Schnittstelle 27 mit dem Scheinwerfer 13 und darüber mit der Schnittstelle 19 verbunden, so dass die aus der Information I ermittelte Approximation an die externe Datensammeleinrichtung 57 übermittelt werden kann.

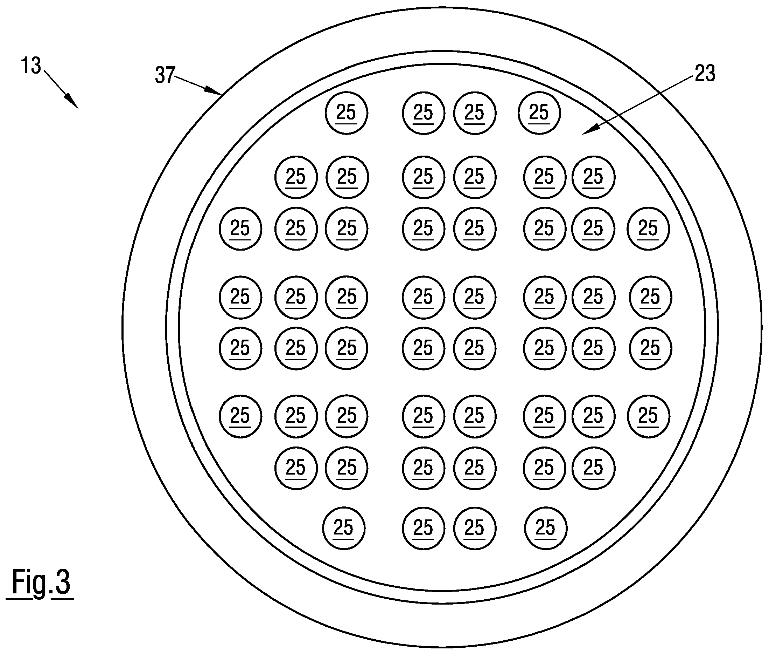

Ferner weist auch der Scheinwerfer 13 eine Steuereinrichtung 31 auf, welche mit der Beleuchtungseinrichtung 23 verbunden und zum Steuern derselben ausgebildet ist. Wie Fig. 3 veranschaulicht, kann die Beleuchtungseinrichtung 23 eines solchen Scheinwerfers 13 eine Mehrzahl von Leuchtmitteln 25 umfassen, wobei die Leuchtmittel 25 insbesondere als Leuchtdioden ausgebildet sein können. Die Größe der bereits genannten Lichtaustrittsöffnung 49 kann an die Größe der Beleuchtungseinrichtung 23 bzw. die Anzahl von Leuchtmitteln 25 angepasst sein. Dabei kann die Steuereinrichtung 31 dazu ausgebildet sein, wahlweise einen jeweiligen Aktivierungszustand der Leuchtmittel 25 einzustellen. Ein solcher Aktivierungszustand kann beispielsweise einen eingeschalteten Zustand eines Leuchtmittels 25, einen ausgeschalteten Zustand, einen eingeschalteten Zustand mit ausgewählter Helligkeit und/oder einen eingeschalteten Zustand mit ausgewähltem Emissionsspektrum umfassen. Ferner kann ein derartiger Aktivierungszustand für eine jeweilige Gruppe von Leuchtmitteln 25 vorgesehen sein. Entsprechend kann durch ein Ansteuern der Beleuchtungseinrichtung 23 und beispielsweise Einschalten einer bestimmten Auswahl von Leuchtmitteln 25 und Ausschalten der weiteren Leuchtmittel 25 das die Lichtaustrittsöffnung 49 verlassende Licht L verändert und somit auch auf die letztlich von der Optikkomponente 15 erzeugbare räumliche Lichtverteilung V eingewirkt werden. Ebenso können durch die Steuerung der Beleuchtungseinrichtung 23 auch Helligkeits- oder Farbeinstellungen des Scheinwerfers 13 veränderbar sein.

Um auch die Einstellung der Beleuchtungseinrichtung 23 bei der Ermittlung der räumlichen Lichtverteilung V berücksichtigen oder als Teil eines Lichtdatensatzes über die Schnittstelle 19 ausgeben zu können, ist die Beleuchtungseinrichtung 23 mit der Schnittstelle 27 zwischen dem Scheinwerfer 13 und der Optikkomponente 15 verbunden. Dadurch kann ein einstellbarer Wert eines Lichteinstellparameters P des Scheinwerfers 13, beispielsweise ein Helligkeitswert oder Farbwert, über die Schnittstelle 27 und die Schnittstelle 19 als Teil eines Lichtdatensatzes, beispielsweise im EULUMDAT-Format, an die Datensammeleinrichtung 57 übermittelt werden. Ferner kann die Berechnungseinrichtung 21 der Optikkomponente 15 dazu ausgebildet sein, den einstellbaren Wert des Lichteinstellparameters P des Scheinwerfers 13 bei einer Ermittlung der räumlichen Lichtverteilung V zu berücksichtigen, wobei der Wert des Lichteinstellparameters P über die Schnittstelle 27 an die Berechnungseinrichtung 21 übermittelt werden kann. Beispielsweise kann so eine eingestellte Helligkeit oder Farbe des Scheinwerfers 13 bzw. der Beleuchtungseinrichtung 23 als einstellbarer Parameter P in die von der Berechnungseinrichtung 21 durchgeführte Ermittlung einer Approximation der von der Optikkomponente 15 erzeugbaren räumlichen Lichtverteilung V einbezogen werden.

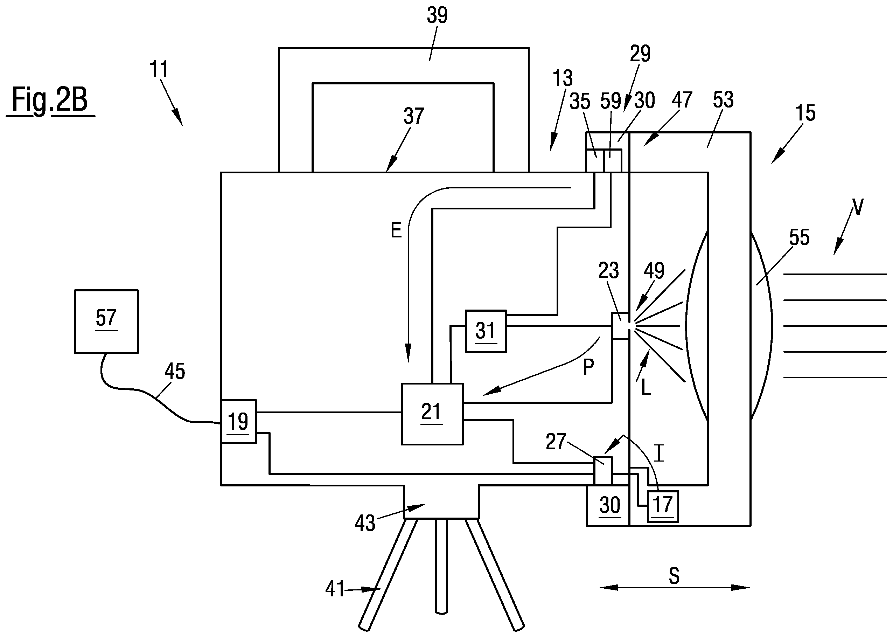

Auch bei der in Fig. 2B veranschaulichten Ausführungsform eines Scheinwerfersystems 11 weist die Optikkomponente 15 einen Speicher 17 auf, in welchem eine Information I über die von der Optikkomponente 15 erzeugbare räumliche Lichtverteilung V gespeichert ist und welcher über eine Schnittstelle 27 mit dem Scheinwerfer 13 verbunden ist. Wiederum ist der Speicher 17 der Optikkomponente 15 über die Schnittstelle 27 mit einer an dem Scheinwerfer 13 ausgebildeten Schnittstelle 19 verbunden, so dass die in dem Speicher 17 gespeicherten Daten und insbesondere die Information I über die erzeugbare räumliche Lichtverteilung V nach außen übermittelbar sind. Diese Verbindung ist jedoch nicht zwingend erforderlich, soweit die nachfolgend erläuterte Berechnungseinrichtung 21 vorgesehen ist.

Ferner weist hier der Scheinwerfer 13 eine mit der Schnittstelle 27 verbundene Berechnungseinrichtung 21 auf, welche dazu ausgebildet ist, die von der Optikkomponente 15 erzeugbare räumliche Lichtverteilung V bzw. eine Approximation dieser Lichtverteilung V anhand der Information I und in Abhängigkeit von einem Wert eines veränderbaren Optikeinstellparameters E zu ermitteln. Die Berechnungseinrichtung 21 ist dabei mit einem Sensor 35 verbunden, mittels dessen der Wert des Optikeinstellparameters E der Optikkomponente 15 ermittelt und so bei der Ermittlung der Approximation der räumlichen Lichtverteilung V berücksichtigt werden kann. Hierfür kann der Sensor 35 beispielsweise dazu ausgebildet sein, den Abstand zwischen der Linse 55 und der Lichtaustrittsöffnung 49 zu ermitteln, wobei dieses Maß beispielsweise als ein jeweiliger damit korrespondierender Halbstreuwinkel an die Berechnungseinrichtung 21 übermittelt werden kann.

Die Berechnungseinrichtung 21 ist darüber hinaus mit der Beleuchtungseinrichtung 23 verbunden, so dass die Berechnungseinrichtung 21 auch jeweilige einstellbare Werte eines Lichteinstellparameters P des Scheinwerfers 13 bei der Ermittlung berücksichtigen kann. Ferner ist die Berechnungseinrichtung 21 mit einer Steuereinrichtung 31 des Scheinwerfers 13 verbunden, die zum Steuern der Beleuchtungseinrichtung 23 ausgebildet ist. Alternativ oder zusätzlich zu der direkten Verbindung der Berechnungseinrichtung 21 mit der Beleuchtungseinrichtung 23 und dem Sensor 35 können die das Scheinwerfersystem 11 betreffende Parameter P und E, wie dargestellt, auch indirekt über die Steuereinrichtung 31 an die Berechnungseinrichtung 21 übermittelt werden.

Die Steuereinrichtung 31 ist dabei zusätzlich zu der Beleuchtungseinrichtung 23 auch mit einer elektrisch ansteuerbaren Verstelleinrichtung 59 verbunden, die beispielsweise in die Koppeleinrichtung 29 integriert sein kann, wobei die Steuereinrichtung 31 dazu ausgebildet ist, die mit dem Scheinwerfer 13 gekoppelte Optikkomponente 15 bzw. deren Linse 55 mittels der Verstelleinrichtung 59 entlang der Stellrichtung S zu bewegen und dadurch den Optikeinstellparameter E einzustellen. Alternativ dazu kann grundsätzlich auch eine in Fig. 2B nicht gezeigte, von der Koppeleinrichtung 29 getrennte und händisch betätigbare Verstelleinrichtung vorgesehen sein (vgl. auch Verstelleinrichtung 59 in Fig. 1G), wobei der Wert des Optikeinstellparameters E bei solchen Ausführungsformen, wie erwähnt, mittels des Sensors 35 bestimmt, an die Berechnungseinrichtung 21 übermittelt und dadurch bei der Ermittlung der Approximation der räumlichen Lichtverteilung V berücksichtigt werden kann.

Wiederum ist die Berechnungseinrichtung 21 mit der Schnittstelle 19 verbunden, so dass der Wert des Optikeinstellparameters E der Optikkomponente 15 und/oder das bereits von der Berechnungseinrichtung 21 ermittelte Berechnungsergebnis nach außen und insbesondere an die externe Datensammeleinrichtung 57 weitergegeben werden kann.

Grundsätzlich kann es auch vorgesehen sein, dass die Ermittlung einer Approximation der erzeugbaren räumlichen Lichtverteilung V in mehreren Schritten und beispielsweise auf jeweilige Berechnungseinrichtungen 21 der Optikkomponente 15 und des Scheinwerfers 13 verteilt durchgeführt wird. Dabei kann beispielsweise ein erstes Ergebnis einer Ermittlung der Berechnungseinrichtung 21 der Optikkomponente 15 an eine Berechnungseinrichtung 21 des Scheinwerfers 13 über- mittelt werden, wobei die Berechnungseinrichtung 21 des Scheinwerfers 13 letztlich anhand des ersten Ergebnisses die gewünschte Approximation berechnet.

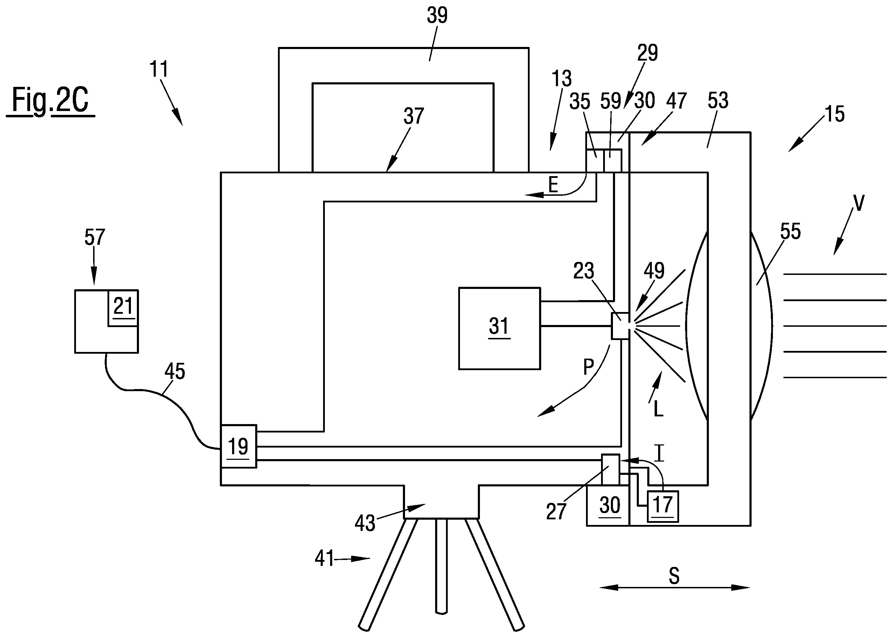

Auch in dem in Fig. 2C veranschaulichten Ausführungsbeispiel eines Scheinwerfersystems 11 weist die mit dem Scheinwerfer 13 gekoppelte bzw. koppelbare Optikkomponente 15 einen Speicher 17 mit einer Information I über die von der Optikkomponente 15 erzeugbare räumliche Lichtverteilung V auf. Diese Information I sowie sonstige in dem Speicher 17 gespeicherte Daten können über eine Schnittstelle 27 und eine Schnittstelle 19 sowie das Kabel 45 an eine externe Datensammeleinrichtung 57 übermittelt werden. Ferner ist die Schnittstelle 19 mit einem Sensor 35 zum Ermitteln eines einstellbaren Optikeinstellparameters E der Optikkomponente 15 verbunden und auch etwaige Einstellungen der Beleuchtungseinrichtung 23 bzw. Werte eines Lichteinstellparameters P des Scheinwerfers 13 können über die Schnittstelle 19 an die externe Datensammeleinrichtung 57 übermittelt werden.

Ferner weist hierbei die Datensammeleinrichtung 57 eine Berechnungseinrichtung 21 auf, welche dazu ausgebildet ist, die von der Optikkomponente 15 erzeugbare räumliche Lichtverteilung V in Abhängigkeit von dem Optikeinstellparameter E sowie dem einstellbaren Wert des Lichteinstellparameters P des Scheinwerfers 13 zu ermitteln. Es kann somit vorgesehen sein, lediglich die Werte der Parameter E und P sowie sonstige Lichtdaten von dem Scheinwerfersystem 11 an die externe Datensammeleinrichtung 57 zu übertragen, wobei etwaige Berechnungen nicht in dem Scheinwerfersystem 11 selbst, sondern von externen Einrichtungen durchgeführt werden. Beispielsweise kann die externe Datensammeleinrichtung 57 als ein Computer ausgebildet sein, welcher die Metadaten für die Postproduktion aufbereitet oder prozessiert.

Neben der Übertragung über ein Kabel 45 kann es grundsätzlich bei sämtlichen Ausführungsformen auch vorgesehen sein, dass die Daten über die Schnittstelle 19 und/oder die Schnittstelle 27 drahtlos und beispielsweise über eine Funk-Verbindung übertragen werden. Insbesondere bei einer solchen Übertragung kann eine Ermittlung der räumlichen Lichtverteilung auch in einer Lichtplanungs- oder Lichtauswerte-App auf einem Mobilfunkgerät bzw. Smartphone erfolgen.

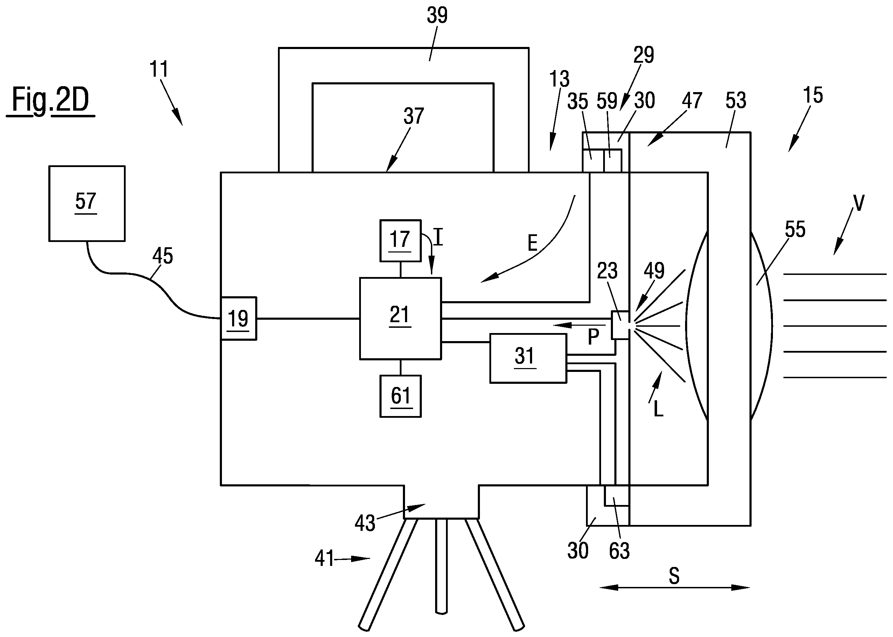

Bei dem in Fig. 2D gezeigten Scheinwerfersystem 11 ist eine mit einem Scheinwerfer 13 lösbar über eine Koppeleinrichtung 29 verbindbare Optikkomponente 15 vorgesehen, wobei der Scheinwerfer 13 einen Speicher 17 aufweist, in welchem eine Information I über die von der Optikkomponente 15 erzeugbare räumliche Lichtverteilung V gespeichert ist. Der Scheinwerfer 13 weist zudem eine mit dem Speicher 17 verbundene Berechnungseinrichtung 21 auf, um eine Approximation der erzeugbaren räumlichen Lichtverteilung V in Abhängigkeit von einem einstellbaren Wert eines Optikeinstellparameters E der Optikkomponente 15 (sofern der Optikeinstellparameter E verstellbar ist) sowie einem einstellbaren Wert eines Lichteinstellparameters P des Scheinwerfers 13 (sofern der Lichteinstellparameter P einstellbar ist) ermitteln zu können.

Dabei ist die Berechnungseinrichtung 21 mit einer Auswahleinrichtung 61 verbunden, so dass ein Benutzer beispielsweise eine jeweilige gekoppelte Optikkomponente 15 auswählen kann, um der Berechnungseinrichtung 21 das Ermitteln der mittels dieser Optikkomponente 15 erzeugbaren räumlichen Lichtverteilung V zu ermöglichen. Der Speicher 17 kann entsprechend für eine Vielzahl koppelbarer Optikkomponenten 15 Informationen I über die jeweilige mittels dieser Optikkomponente 15 erzeugbare räumliche Lichtverteilung V umfassen. Ferner weist der Scheinwerfer 13 eine Erfassungseinrichtung 63 auf, welche dazu ausgebildet ist, eine jeweilige gekoppelte Optikkomponente 15 automatisch zu erfassen, so dass diese zur Ermittlung der erzeugbaren räumlichen Lichtverteilung V notwendige Identifikation der Berechnungseinrichtung 21 automatisch über die mit der Erfassungseinrichtung 63 verbundene Steuereinrichtung 31 des Scheinwerfers 13 an die Berechnungseinrichtung 21 übermittelt werden kann.

Grundsätzlich können somit, wie aus den verschiedenen möglichen Ausführungsformen des Scheinwerfersystems 11 hervorgeht, auch die anhand der Figuren 2A bis 2D im Zusammenhang mit einem Scheinwerfersystem 11 gemeinsam beschriebenen Komponenten, ein Scheinwerfer 13 und eine Optikkomponente 15, das Bereitstellen von Daten über die mittels der Optikkomponente 15 erzeugbare räumliche Lichtverteilung V gesondert ermöglichen. Entsprechend sind diese Komponenten, trotz ihrer gemeinsamen Beschreibung in einem Scheinwerfersystem 11, jeweils auch unabhängig von diesem Scheinwerfersystem 11 als gesonderte Aspekte der vorliegenden Erfindung zu verstehen.

Neben solchen Scheinwerfersystemen 11 mit Scheinwerfern 13 und wahlweise damit koppelbaren Optikkomponenten 15 zeigt Fig. 4 einen Scheinwerfer 13 mit integrierter bzw. fest verbundener Optikkomponente 15 zum Erzeugen einer räumlichen Lichtverteilung V. Die Optikkomponente 15 ist dabei folglich dauerhaft mit dem Scheinwerfer 13 verbunden. Der Scheinwerfer 13 weist einen Speicher 17 auf, in welchem eine Information I über die erzeugbare räumliche Lichtverteilung V gespeichert ist und der Speicher 17 ist mit einer Berechnungseinrichtung 21 verbunden, um eine Approximation der erzeugbaren räumlichen Lichtverteilung V in Abhängigkeit von einem veränderbaren Optikeinstellparameter E der Optikkomponente 15 und eines einstellbaren Parameters P des Scheinwerfers 13 ermitteln zu können. Um die erzeugbare räumliche Lichtverteilung V bei einer solchen integrierten Optikkomponente 15 verändern zu können, weist der Scheinwerfer 13 eine Verstelleinrichtung 59 auf, über welche der Abstand zwischen der Linse 55 und der Lichtaustrittsöffnung 49 händisch oder durch elektrische Ansteuerung mittels der Steuereinrichtung 31 des Scheinwerfers 13 verändert werden kann.

Ferner kann es auch vorgesehen sein, dass ein Scheinwerfer 13 mit integrierter Optikkomponente 15, deren Einstellung nicht veränderbar ist, einen Speicher 17 mit einer Information I über die von der Optikkomponente 15 erzeugbare räumliche Lichtverteilung V aufweist, wobei auch ein solcher Scheinwerfer 13 beispielsweise eine Berechnungseinrichtung 21 umfassen kann, um die erzeugbare räumliche Lichtverteilung V in Abhängigkeit von einem einstellbaren Wert eines Lichteinstellparameters P des Scheinwerfers 13, beispielsweise einem Helligkeitswert, ermitteln zu können.

Fig. 5 veranschaulicht ein Verfahren zum Ermitteln einer Approximation einer räumlichen Lichtverteilung V eines Scheinwerfersystems 11 mit einem Scheinwerfer 13 und einer damit koppelbaren oder gekoppelten Optikkomponente 15, welches beispielsweise von den Berechnungseinrichtungen 21 der in den Figuren 2A bis 2D gezeigten Scheinwerfersysteme 11 oder der Berechnungseinrichtung 21 des in Fig. 4 veranschaulichten Scheinwerfers 13 durchgeführt werden kann.

Dabei wird zunächst in einem ersten Schritt 101 ein Wert eines Einstellparameters E, P des Scheinwerfersystems 11 ermittelt, von welchem die räumliche Lichtverteilung V direkt oder indirekt abhängt. Der Einstellparameter E, P kann dabei beispielsweise einen Optikeinstellparameter E der Optikkomponente 15, insbesondere einen Halbstreuwinkel der Optikkomponente 15, oder einen Lichteinstellparameter P des Scheinwerfers 13, wie die bereits erwähnten Aktivierungszustände von Leuchtmitteln 25 einer Beleuchtungseinrichtung 23 des Scheinwerfers 13, umfassen. Ferner kann der Einstellparameter E, P beispielsweise auch einen Abstand einer Linse 55 oder eines Reflektors 56 zu der genannten Beleuchtungseinrichtung 23 oder Abstände solcher optischen Elemente der Optikkomponente zueinander umfassen.

In der Folge wird in dem Schritt 103 ein Speicher 17 ausgelesen, in welchem beispielsweise Nachschlagetabellen oder Rechenvorschriften zum Ermitteln einer Approximation der räumlichen Lichtverteilung V in Abhängigkeit von dem eingestellten Wert des Einstellparameters E, P gespeichert sein können. Entsprechend kann in einem folgenden Schritt 105 eine Überprüfung stattfinden, ob der Speicher 17 für den jeweiligen ermittelten Wert des Einstellparameters E, P eine Nachschlagetabelle umfasst, aus welcher eine Approximation der erzeugbaren räumlichen Lichtverteilung V auslesbar ist, oder ob die Approximation für diesen Wert des Einstellparameters E, P anhand einer gespeicherten Rechenvorschrift ermittelt werden kann.

Sofern eine Nachschlagetabelle vorliegt, kann diese in einem Schritt 107 ausgelesen und die so ermittelte Approximation der räumlichen Lichtverteilung V bei dem ermittelten Wert des Einstellparameters E, P in einem abschließenden Schritt 109 ausgegeben werden.

Beispielsweise können in einer solchen Nachschlagetabelle Approximationen der realen erzeugbaren räumlichen Lichtverteilung V für eine Mehrzahl von Referenz-Lichtverteilungen Z wiedergegeben sein, die beispielsweise in einem vorgelagerten Kalibrierungsschritt 201 durch eine Mehrzahl von Messungen der räumlichen Lichtverteilung V bei verschiedenen Werten E1, E2, E3 des Einstellparameters E bzw. P gewonnen worden sein können (vgl. auch Fig. 6). Insbesondere bei Scheinwerfersystemen 11, die lediglich eine begrenzte und diskrete Auswahl von Werten E1, E2, E3 des Einstellparameters E oder P ermöglichen, beispielsweise eine diskrete Auswahl möglicher Halbstreuwinkel einer Optikkomponente 15, können grundsätzlich sämtliche der möglichen erzeugbaren räumlichen Lichtverteilungen V aus derartigen Nachschlagetabellen ermittelt werden.

Steht hingegen für den jeweiligen ermittelten Wert des Optikeinstellparameters E keine Nachschlagetabelle zur Verfügung, kann in einem Schritt 111 eine Rechenvorschrift aus dem Speicher 17 ausgelesen werden, anhand derer eine Approximation der räumlichen Lichtverteilung V berechnet werden kann. Beispielsweise kann eine solche Rechenvorschrift eine Vorschrift zur Interpolation zwischen jeweiligen Referenz-Lichtverteilung Z1, Z2, Z3 definieren, um eine Approximation der erzeugbaren räumlichen Lichtverteilung V bei einem Wert des Optikeinstellparameters E, für welchen keine Referenz-Lichtverteilung Z vorliegt, ermitteln zu können. Insbesondere kann dabei eine lineare Interpolation zwischen solchen Referenz-Lichtverteilungen Z vorgesehen sein.

Ferner kann die Rechenvorschrift für eine Mehrzahl von Raumpunkten r jeweilige Polynominterpolationen F umfassen, welche den Anteil T des auf einen jeweiligen Raumpunkt r1 entfallenden Lichtes in Abhängigkeit von dem Optikeinstellparameter E beschreiben. Solche Polynominterpolationen F können dabei in einem dem Verfahren vorhergehenden Parametrisierungsschritt 203 ermittelt worden sein, wie Fig. 6 veranschaulicht.

Dabei können zunächst in einem Kalibrierungsschritt 201 mehrere Referenz-Lichtverteilungen Z bei verschiedenen, hier exemplarisch drei, Werten E1, E2 und E3 des Optikeinstellparameters E gemessen werden (vgl. Fig. 6). Anhand dieser Referenz-Lichtverteilungen Z kann für eine Vielzahl von Raumpunkten r ein bei den jeweiligen Werten E1, E2 und E3 des Optikeinstellparameters E auf einen Raumpunkt, beispielsweise den Raumpunkt r1, entfallender Anteil T des Lichts bestimmt werden.

Die so ermittelten Anteile T1, T2 und T3, die bei den Werten E1, E2 und E3 des Optikeinstellparameters E auf den Raumpunkt r1 entfallen, können in einem Parametrisierungsschritt 203 als Stützstellen dienen, mittels derer eine Polynominterpolation F ermittelt werden kann, welche die Abhängigkeit des auf den Raumpunkt r1 entfallenden Anteils T in Abhängigkeit von dem Optikeinstellparameter E widerspiegelt. Beispielsweise können die Interpolationsparameter aᵢ der Polynominterpolation F durch Fitten einer Polynomfunktion N-ter Ordnung an die Stützstellen bestimmt werden. Abschließend können die ermittelten Interpolationsparameter aᵢ sowie der Raumpunkt r1 in einem Speicherschritt 205 in dem Speicher 17 des Scheinwerfersystems 11 gespeichert werden. Alternativ oder zusätzlich können die Referenz-Lichtverteilungen Z1, Z2 und Z3 beispielsweise in Form einer jeweiligen Nachschlagetabelle in den Speicher 17 geschrieben werden, sodass bei einer Einstellung des Optikeinstellparameters E auf einen der Werte E1, E2 oder E3 unmittelbar und zeitsparend auf eine solche Tabelle zugegriffen werden kann, ohne dass eine Ermittlung erfolgt.

Alternativ zu einer solchen Rechenvorschrift, die auf mehreren Polynominterpolationen F basiert, können auch andersartige Rechenvorschriften in dem Speicher 17 gespeichert und in dem Schritt 111 ausgelesen werden (vgl. Fig. 5). Beispielsweise kann die Rechenvorschrift anhand eines oder mehrerer bzw. verschiedener physikalischer Modelle entwickelt worden oder darauf gestützt sein oder auf vorhergehenden Simulationen beruhen.

Zusätzlich zu dem Ermitteln des Wertes eines Optikeinstellparameters E in dem Schritt 101 kann in einem Schritt 113 eine Abfrage weiterer Einstellungen des Scheinwerfersystems 11 erfolgen, welche die erzeugbare räumliche Lichtverteilung V beeinflussen können. Insbesondere können dabei zusätzlich zu einem Halbstreuwinkel der Optikkomponente 15 oder einer den Halbstreuwinkel beeinflussenden Einstellung als ermittelter Einstellparameter E jeweilige Lichteinstellparameter P, wie Helligkeits- und/oder Farbeinstellungen, des Scheinwerfers 13 berücksichtigt werden. Grundsätzlich kann ein solcher Schritt 113 zum Abfragen weiterer Parameter P zu einem beliebigen Zeitpunkt des in Fig. 5 dargestellten Verfahrens erfolgen und es können gegebenenfalls auch Nachschlagetabellen angelegt sein, die den Einfluss weiterer Parameter P auf die erzeugbare räumliche Lichtverteilung V berücksichtigen. Entsprechend können auch bei einem Ermitteln einer Approximation anhand einer Nachschlagetabelle vor dem Schritt 105 oder dem Schritt 107 in einem nicht dargestellten Schritt weitere die erzeugbare räumliche Lichtverteilung V beeinflussende Parameter P ermittelt werden bzw. der Schritt 113 kann insbesondere auch vor dem Schritt 105 erfolgen.

Nachdem die Rechenvorschrift sowie die Werte sämtlicher zu berücksichtigender Parameter E, P des Scheinwerfersystems 11 ermittelt wurden, kann in einem Schritt 115 eine Approximation der tatsächlich erzeugten bzw. erzeugbaren räumlichen Lichtverteilung V anhand der Rechenvorschrift ermittelt werden. Insbesondere können bei dieser Ermittlung ausschließlich Additionen und Subtraktionen durchgeführt werden, um auf einfache Weise und entsprechend ohne großen Rechenaufwand ein Ergebnis erhalten und in Echtzeit übermitteln zu können. Beispielsweise können dabei die ermittelten Werte der relevanten Parameter E, P in die genannten Polynominterpolationen F eingesetzt werden, um eine Approximation der räumlichen Lichtverteilung V zu ermitteln. Abschließend kann in einem Schritt 117 die ermittelte Approximation ausgegeben werden.

Grundsätzlich kann das in Fig. 5 veranschaulichte Verfahren in verschiedenen Varianten durchgeführt werden. Insbesondere können beispielsweise auch lediglich entweder Nachschlagetabellen oder Rechenvorschriften vorgesehen sein.

Die hierin offenbarten Scheinwerfersysteme 11, Scheinwerfer 13 sowie Optikkomponenten 15 ermöglichen es, möglichst vollständige Lichtdaten und insbesondere Daten über die mittels einer Optikkomponente 15 erzeugbare räumliche Lichtverteilung V zu ermitteln und in Echtzeit zur Verfügung zu stellen. Ferner kann die erzeugbare räumliche Lichtverteilung V auch in Abhängigkeit von einem einstellbaren Optikeinstellparameter E der Optikkomponente 15 oder sonstigen einstellbaren Parametern, insbesondere Lichteinstellparametern P des Scheinwerfers 13 bzw. des Scheinwerfersystems 11, insbesondere durch Durchführen des beschriebenen Verfahrens, ermittelt werden, so dass Lichtdaten bei jedweder Einstellung eines Scheinwerfersystems 11 beispielsweise für die Postproduktion einer Filmaufnahme zur Verfügung gestellt werden können.

### Bezugszeichenliste

- 11: Scheinwerfersystem
- 13: Scheinwerfer
- 15: Optikkomponente
- 15a: weitere Optikkomponente
- 17: Speicher
- 19: Schnittstelle nach außen
- 21: Berechnungseinrichtung
- 23: Beleuchtungseinrichtung
- 25: Leuchtmittel
- 27: Schnittstelle zwischen Optikkomponente und Scheinwerfer
- 29: Koppeleinrichtung
- 30: Koppelelement des Scheinwerfers
- 31: Steuereinrichtung des Scheinwerfers
- 32: Koppelelement der Optikkomponente
- 33: Steuereinrichtung der Optikkomponente
- 34: Ring
- 35: Sensor
- 36: Lösemechanismus
- 37: Scheinwerfergehäuse
- 39: Haltegriff
- 41: Stativ
- 43: Halteabschnitt
- 45: Kabel
- 47: Koppelabschnitt
- 49: Lichtaustrittsöffnung
- 51: Ausrichteinrichtung
- 53: Tragkörper
- 55: Linse
- 56: Reflektor
- 57: externe Datensammeleinrichtung
- 59: Verstelleinrichtung
- 61: Auswahleinrichtung
- 63: Erfassungseinrichtung
- 101: Ermitteln eines Wertes des Einstellparameters
- 103: Auslesen des Speichers
- 105: Überprüfen
- 107: Auslesen einer Nachschlagetabelle
- 109: Ausgeben einer Approximation
- 111: Auslesen einer Rechenvorschrift
- 113: Abfrage von Einstellungen des Scheinwerfersystems
- 115: Ermitteln einer Approximation
- 117: Ausgabe der berechneten Approximation
- 201: Kalibrierungsschritt
- 203: Parametrisierungsschritt
- 205: Speicherschritt

- A: Schwenkachse
- aᵢ: Parameter der Polynominterpolation
- E, E1, E2, E3: Optikeinstellparameter
- F: Polynominterpolation
- I: Information
- L: erzeugtes Licht
- P: Lichteinstellparameter
- S: Stellrichtung
- V: erzeugbare räumliche Lichtverteilung
- Z, Z1, Z2, Z3: Referenz-Lichtverteilung

## Patentansprüche

1. Scheinwerfersystem (11) zum Beleuchten einer Film- oder Bühnenumgebung, umfassend
einen Scheinwerfer (13) zum Erzeugen von Licht (L) und zumindest eine mit dem Scheinwerfer (13) koppelbare Optikkomponente (15), welche dazu ausgebildet ist, in einem mit dem Scheinwerfer (13) gekoppelten Zustand aus dem von dem Scheinwerfer (13) ausgegebenen Licht (L) eine bestimmte räumliche Lichtverteilung (V) zu erzeugen,
wobei die Optikkomponente (15) und/oder der Scheinwerfer (13) einen Speicher (17) aufweist/aufweisen, in dem eine Information (I) über die von der Optikkomponente (15) erzeugbare räumliche Lichtverteilung (V) gespeichert ist,
**dadurch gekennzeichnet, dass**
die gespeicherte Information (I) eine von der Optikkomponente (15) erzeugbare räumliche Helligkeitsverteilung und/oder räumliche Farb- oder Spektralverteilung repräsentiert,
wobei die gespeicherte Information (I) das bei gekoppelter Optikkomponente (15) auf jeweilige Raumpunkte entfallende Licht repräsentiert.

2. Scheinwerfersystem (11) nach Anspruch 1,
wobei das Scheinwerfersystem (11) eine Schnittstelle (19) aufweist, die dazu ausgebildet ist, die gespeicherte Information (I) oder hieraus abgeleitete Werte auszugeben.

3. Scheinwerfersystem (11) nach Anspruch 1 oder Anspruch 2,
wobei die von der Optikkomponente (15) erzeugbare räumliche Lichtverteilung (V) durch Einstellen zumindest eines Optikeinstellparameters (E) veränderbar ist, wobei die gespeicherte Information (I) zumindest eine erste Information, welche die von der Optikkomponente (15) bei einem ersten Wert des Optikeinstellparameters (E) erzeugbare räumliche Lichtverteilung (V) repräsentiert, und eine zweite Information, welche die von der Optikkomponente (15) bei einem zweiten Wert des Optikeinstellparameters (E) erzeugbare räumliche Lichtverteilung (V) repräsentiert, umfasst;
und/oder
wobei die von der Optikkomponente (15) erzeugbare räumliche Lichtverteilung (V) durch Einstellen zumindest eines Optikeinstellparameters (E) veränderbar ist, wobei die gespeicherte Information (I) eine Rechenvorschrift zur Ermittlung der räumlichen Lichtverteilung (V) in Abhängigkeit von dem Optikeinstellparameter (E) umfasst, wobei die Rechenvorschrift insbesondere für eine Mehrzahl von Raumpunkten (r) zumindest eine jeweilige Polynominterpolation (F) umfasst, welche die Abhängigkeit des Anteils (T) der erzeugbaren Lichtverteilung (V) an dem jeweiligen Raumpunkt (r1) von dem Optikeinstellparameter (E) beschreibt.

4. Scheinwerfersystem (11) nach einem der vorhergehenden Ansprüche, wobei das Scheinwerfersystem (11) eine Berechnungseinrichtung (21) aufweist, welche dazu ausgebildet ist, die von der Optikkomponente (15) erzeugbare räumliche Lichtverteilung (V) anhand der in dem Speicher (17) gespeicherten Information (I) zu ermitteln.

5. Scheinwerfersystem (11) nach Anspruch 4,
wobei die Berechnungseinrichtung (21) dazu ausgebildet ist, bei der Ermittlung der von der Optikkomponente (15) erzeugbaren räumlichen Lichtverteilung (V) einen Wert zumindest eines einstellbaren Lichtparameters (P) des Scheinwerfersystems (11), insbesondere einen Helligkeitswert oder einen Farbwert, zu berücksichtigen;
und/oder
wobei der Scheinwerfer (13) eine Mehrzahl von Leuchtmitteln (25), insbesondere eine Mehrzahl von Leuchtdioden aufweist, wobei für jedes Leuchtmittel (25) ein Aktivierungszustand und/oder für eine Gruppe von Leuchtmitteln (25) ein gemeinsamer Aktivierungszustand einstellbar ist, wobei der einstellbare Aktivierungszustand eines jeden Leuchtmittels (25) einen eingeschalteten Zustand, einen ausgeschalteten Zustand, einen eingeschalteten Zustand mit ausgewählter Helligkeit und/oder einen eingeschalteten Zustand mit ausgewähltem Emissionsspektrum umfasst, und wobei die Berechnungseinrichtung (21) dazu ausgebildet ist, die von der Optikkomponente (15) erzeugbare räumliche Lichtverteilung (V) in Abhängigkeit von den eingestellten Aktivierungszuständen der Leuchtmittel (25) zu ermitteln;
und/oder
wobei das Scheinwerfersystem (11) eine Schnittstelle (19) aufweist, die dazu ausgebildet ist, die berechnete räumliche Lichtverteilung (V) auszugeben.

6. Scheinwerfersystem (11) nach einem der vorhergehenden Ansprüche, wobei in dem Speicher (17) eine Artikelnummer, eine Seriennummer, ein Halbstreuwinkel und/oder ein Lichtstärkewert der Optikkomponente (15) gespeichert sind/ist;
und/oder
wobei der Scheinwerfer (13) eine Koppeleinrichtung (29) aufweist und die Optikkomponente (15) einen Koppelabschnitt (47) aufweist, wobei die Optikkomponente (15) über den Koppelabschnitt (47) an der Koppeleinrichtung (29) des Scheinwerfers (13) lösbar befestigbar ist.

7. Optikkomponente (15) für einen Scheinwerfer (13) zum Beleuchten einer Film- oder Bühnenumgebung,
wobei die Optikkomponente (15) dazu ausgebildet ist, mit einem zum Erzeugen von Licht (L) ausgebildeten Scheinwerfer (13) gekoppelt zu werden und in einem mit dem Scheinwerfer (13) gekoppelten Zustand aus dem von dem Scheinwerfer (13) ausgegebenen Licht (L) eine bestimmte räumliche Lichtverteilung (V) zu erzeugen,
wobei die Optikkomponente (15) einen Speicher (17) aufweist, in dem eine Information (I) über die von der Optikkomponente (15) erzeugbare räumliche Lichtverteilung (V) gespeichert ist,
**dadurch gekennzeichnet, dass**
die gespeicherte Information (I) eine von der Optikkomponente (15) erzeugbare räumliche Helligkeitsverteilung und/oder räumliche Farb- oder Spektralverteilung repräsentiert,
wobei die gespeicherte Information (I) das bei gekoppelter Optikkomponente (15) auf jeweilige Raumpunkte entfallende Licht repräsentiert.

8. Optikkomponente (15) nach Anspruch 7,
wobei die Optikkomponente (15) eine Schnittstelle (27) aufweist, über welche der Speicher (17) auslesbar ist;
und/oder
wobei die von der Optikkomponente (15) erzeugbare räumliche Lichtverteilung (V) durch Einstellen eines Optikeinstellparameters (E) veränderbar ist; und/oder
wobei in dem Speicher (17) eine Artikelnummer, eine Seriennummer, ein Halbstreuwinkel und/oder ein Lichtstärkewert der Optikkomponente (15) gespeichert sind/ist.

9. Optikkomponente (15) nach Anspruch 7 oder Anspruch 8,
wobei die Optikkomponente (15) eine Berechnungseinrichtung (21) aufweist, welche dazu ausgebildet ist, die von der Optikkomponente (15) erzeugbare räumliche Lichtverteilung (V) anhand der in dem Speicher (17) gespeicherten Information (I) zu ermitteln;
wobei die Berechnungseinrichtung (21) insbesondere dazu ausgebildet ist, Daten von dem gekoppelten Scheinwerfer (13) zu empfangen und bei der Ermittlung der erzeugbaren räumlichen Lichtverteilung (V) zu berücksichtigen; und/oder
wobei die Berechnungseinrichtung (21) insbesondere dazu ausgebildet ist, die berechnete räumliche Lichtverteilung (V) an den gekoppelten Scheinwerfer (13) zu übermitteln.

10. Scheinwerfer (13) zum Erzeugen von Licht (L) zum Beleuchten einer Filmoder Bühnenumgebung,
mit einer Koppeleinrichtung (29), mittels derer zumindest eine austauschbare Optikkomponente (15) mit dem Scheinwerfer (13) koppelbar ist,
wobei die Optikkomponente (15) dazu ausgebildet ist, in einem mit dem Scheinwerfer (13) gekoppelten Zustand aus dem von dem Scheinwerfer (13) ausgegebenen Licht (L) eine bestimmte räumliche Lichtverteilung (V) zu erzeugen,
**gekennzeichnet durch**
eine Leseeinrichtung, welche dazu ausgebildet ist, eine Information (I) über die von der Optikkomponente (15) erzeugbare räumliche Lichtverteilung (V) aus einem Speicher (17) der gekoppelten Optikkomponente (15) auszulesen,
wobei die gespeicherte Information (I) eine von der Optikkomponente (15) erzeugbare räumliche Helligkeitsverteilung und/oder räumliche Farb- oder Spektralverteilung repräsentiert, und
wobei die gespeicherte Information (I) das bei gekoppelter Optikkomponente (15) auf jeweilige Raumpunkte entfallende Licht repräsentiert; wobei der Scheinwerfer (13) insbesondere eine Schnittstelle (27) aufweist, die dazu ausgebildet ist, die ausgelesene Information (I) oder hieraus abgeleitete Werte auszugeben.

11. Scheinwerfer (13) nach Anspruch 10,
wobei der Scheinwerfer (13) eine Berechnungseinrichtung (21) aufweist, welche dazu ausgebildet ist, die erzeugbare räumliche Lichtverteilung (V) anhand der ausgelesenen Information (I) zu ermitteln.

12. Scheinwerfer (13) nach Anspruch 11,
wobei die Berechnungseinrichtung (21) dazu ausgebildet ist, die erzeugbare räumliche Lichtverteilung (V) unter Berücksichtigung eines Werts zumindest eines Lichteinstellparameters (P) des Scheinwerfers (13) zu ermitteln, insbesondere eines Helligkeitswertes oder eines Farbwertes;
und/oder
wobei der Scheinwerfer (13) eine Mehrzahl von Leuchtmitteln (25), insbesondere eine Mehrzahl von Leuchtdioden, aufweist, wobei für jedes Leuchtmittel (25) ein Aktivierungszustand und/oder für eine Gruppe von Leuchtmitteln (25) ein gemeinsamer Aktivierungszustand einstellbar ist, wobei der einstellbare Aktivierungszustand eines jeden Leuchtmittels (25) einen eingeschalteten Zustand, einen ausgeschalteten Zustand, einen eingeschalteten Zustand mit ausgewählter Helligkeit und/oder einen eingeschalteten Zustand mit ausgewähltem Emissionsspektrum umfasst, und wobei die Berechnungseinrichtung (21) dazu ausgebildet ist, die erzeugbare räumliche Lichtverteilung (V) in Abhängigkeit von den eingestellten Aktivierungszuständen der Leuchtmittel (25) zu ermitteln;
und/oder
wobei die Berechnungseinrichtung (21) dazu ausgebildet ist, die erzeugbare räumliche Lichtverteilung (V) unter Berücksichtigung eines Wertes zumindest eines einstellbaren Optikeinstellparameters (E) der gekoppelten Optikkomponente (15) zu ermitteln.

13. Scheinwerfer (13) zum Erzeugen von Licht (L) zur Beleuchtung einer Filmoder Bühnenumgebung,
mit einer integrierten Optikkomponente (15), welche dazu ausgebildet ist, aus dem von dem Scheinwerfer (13) ausgegebenen Licht (L) eine bestimmte räumliche Lichtverteilung (V) zu erzeugen, und mit einem Speicher (17), in welchem eine Information (I) über die von der Optikkomponente (15) erzeugbare räumliche Lichtverteilung (V) gespeichert ist,
**dadurch gekennzeichnet, dass**
die gespeicherte Information (I) eine von der Optikkomponente (15) erzeugbare räumliche Helligkeitsverteilung und/oder räumliche Farb- oder Spektralverteilung repräsentiert,
wobei die gespeicherte Information (I) das bei gekoppelter Optikkomponente (15) auf jeweilige Raumpunkte entfallende Licht repräsentiert.

14. Scheinwerfer (13) nach Anspruch 13,
wobei der Scheinwerfer (13) eine Schnittstelle (19) aufweist, die dazu ausgebildet ist, die gespeicherte Information (I) oder hieraus abgeleitete Werte auszugeben;
und/oder
wobei die von der Optikkomponente (15) erzeugbare räumliche Lichtverteilung (V) durch Einstellen zumindest eines Optikeinstellparameters (E) veränderbar ist;
und/oder
wobei der Scheinwerfer (13) eine mit dem Speicher (17) verbundene Berechnungseinrichtung (21) aufweist, welche dazu ausgebildet ist, die erzeugbare räumliche Lichtverteilung (V) anhand der in dem Speicher (17) gespeicherten Information (I) zu ermitteln, wobei die Berechnungseinrichtung (21) vorzugsweise dazu ausgebildet ist, die erzeugbare räumliche Lichtverteilung (V) unter Berücksichtigung eines Werts zumindest eines einstellbaren Parameters (P) des Scheinwerfers (13) zu ermitteln, insbesondere unter Berücksichtigung eines Wertes eines Optikeinstellparameters (E) der Optikkomponente (15) und/oder einer Helligkeitseinstellung und/oder einer Farbeinstellung des Scheinwerfers (13).

15. Verfahren zum Ermitteln einer räumlichen Lichtverteilung (V) eines Scheinwerfersystems (11), das einen Scheinwerfer (13) zum Erzeugen von Licht (L) zur Beleuchtung einer Film- oder Bühnenumgebung nach einem der Ansprüche 10 bis 14 und eine austauschbare oder integrierte Optikkomponente (15) zum Erzeugen zumindest einer räumlichen Lichtverteilung (V) - insbesondere gemäß einem der Ansprüche 7 bis 9 - umfasst oder das nach einem der Ansprüche 1 bis 6 ausgebildet ist,
wobei die Optikkomponente (15) dazu ausgebildet ist, in einem mit dem Scheinwerfer (13) gekoppelten Zustand aus dem von dem Scheinwerfer (13) ausgegebenen Licht (L) eine bestimmte räumliche Lichtverteilung (V) zu erzeugen,
wobei die räumliche Lichtverteilung (V) von einem eingestellten Wert zumindest eines Einstellparameters (E, P) des Scheinwerfersystems (11) abhängt,
wobei
- der eingestellte Wert des zumindest einen Einstellparameters (E, P) ermittelt wird (101); und
**dadurch gekennzeichnet, dass**
- eine Approximation der bei dem eingestellten Wert des Einstellparameters (E, P) erzeugbaren räumlichen Lichtverteilung (V) anhand einer Rechenvorschrift und/oder einer Nachschlagetabelle ermittelt wird (107, 115).

16. Verfahren nach Anspruch 15,
wobei der zumindest eine Einstellparameter einen Optikeinstellparameter (E) der Optikkomponente (15), insbesondere einen Halbstreuwinkel der Optikkomponente (15), umfasst;
und/oder
wobei der zumindest eine Einstellparameter einen Lichteinstellparameter (P) des Scheinwerfers (13), insbesondere einen Aktivierungszustand einer Beleuchtungseinrichtung (23) des Scheinwerfers (13), eine Helligkeitseinstellung des Scheinwerfers (13) und/oder Farbeinstellung des Scheinwerfers (13), umfasst.

17. Verfahren nach Anspruch 15 oder 16,
wobei die Ermittlung der Approximation der räumlichen Lichtverteilung (V) anhand der Rechenvorschrift lediglich Additionen, Subtraktionen und/oder Multiplikationen umfasst;
und/oder
wobei die Nachschlagetabelle eine Mehrzahl von Approximationen für Referenz-Lichtverteilungen (Z) bei einer Mehrzahl jeweiliger Referenzwerte des Einstellparameters (E, P) umfasst;
und/oder
wobei die Rechenvorschrift eine Vorschrift zur Interpolation zwischen einer ersten Referenz-Lichtverteilung (Z1) bei einem ersten Referenzwert (E1) des Einstellparameters (E) und einer zweiten Referenz-Lichtverteilung (Z2) bei einem zweiten Referenzwert (E2) des Einstellparameters (E) definiert.

18. Verfahren nach einem der Ansprüche 15 bis 17,
wobei in einem Parametrisierungsschritt (203) die Rechenvorschrift basierend auf zumindest einer ersten Referenz-Lichtverteilung (Z1) bei einem ersten Referenzwert (E1) des Einstellparameters (E) und zumindest einer zweiten Referenz-Lichtverteilung (Z2) bei einem zweiten Referenzwert (E2) des Einstellparameters (E) ermittelt wird.

19. Verfahren nach Anspruch 18,
wobei in dem Parametrisierungsschritt (203) für eine Mehrzahl von vorgegebenen oder vorgebbaren Raumpunkten (r) eine jeweilige Polynominterpolation (F) zum Parametrisieren des auf den jeweiligen Raumpunkt (r1) auftreffenden Lichtes (T) in Abhängigkeit von dem Einstellparameter (E, P) durchgeführt wird, wobei Interpolationsparameter (aᵢ) der Polynominterpolationen (F) anhand der Referenz-Lichtverteilungen (Z1, Z2, Z3) bestimmt werden, und wobei die Rechenvorschrift die jeweiligen Polynominterpolationen (F) für die Mehrzahl von Raumpunkten (r) umfasst;
oder
wobei in dem Parametrisierungsschritt (203) die Referenz-Lichtverteilungen (Z) in eine Mehrzahl von Wellenlängenbereichen unterteilt werden und für eine Mehrzahl von vorgegebenen oder vorgebbaren Raumpunkten (r) für jeden der Wellenlängenbereiche eine jeweilige Polynominterpolation (F) zum Parametrisieren des auf den jeweiligen Raumpunkt (r1) auftreffenden Lichtes (T) in Abhängigkeit von dem Einstellparameter (E) durchgeführt wird, wobei Interpolationsparameter (aᵢ) der Polynominterpolationen (F) anhand der Referenz-Lichtverteilungen (Z1, Z2, Z3) bestimmt werden, und wobei die Rechenvorschrift die jeweiligen Polynominterpolationen (F) für die Mehrzahl von Raumpunkten (r) umfasst;
wobei die Interpolationsparameter (aᵢ) der Polynominterpolationen (F) und die jeweiligen Raumpunkte (r) vorzugsweise in einem Speicher (17) des Scheinwerfers (13) oder der Optikkomponente (15) gespeichert werden.

20. Computerprogrammprodukt, umfassend Befehle, die bei der Ausführung durch einen Computer diesen veranlassen, das Verfahren nach einem der Ansprüche 15 bis 19 auszuführen.

## Claims

1. A spotlight system (11) for illuminating a film or stage environment, said spotlight system (11) comprising
a spotlight (13) for generating light (L); and at least one optical component (15) which is couplable to the spotlight (13) and which is configured, in a state coupled to the spotlight (13), to produce a specific spatial light distribution (V) from the light (L) output by the spotlight (13),
wherein the optical component (15) and/or the spotlight (13) has/have a memory (17) in which information (I) on the spatial light distribution (V) producible by the optical component (15) is stored,
**characterized in that**
the stored information (I) represents a spatial brightness distribution and/or a spatial color distribution or spatial spectral distribution producible by the optical component (15),
wherein the stored information (I) represents the light incident on respective spatial points when the optical component (15) is coupled.

2. A spotlight system (11) in accordance with claim 1,
wherein the spotlight system (11) has an interface (19) which is configured to output the stored information (I) or values derived therefrom.

3. A spotlight system (11) in accordance with claim 1 or claim 2,
wherein the spatial light distribution (V) producible by the optical component (15) can be varied by setting at least one optics setting parameter (E), wherein the stored information (I) comprises at least a first piece of information, which represents the spatial light distribution (V) producible by the optical component (15) at a first value of the optics setting parameter (E), and a second piece of information which represents the spatial light distribution (V) producible by the optical component (15) at a second value of the optics setting parameter (E);
and/or
wherein the spatial light distribution (V) producible by the optical component (15) can be varied by setting at least one optics setting parameter (E), wherein the stored information (I) comprises a calculation rule for determining the spatial light distribution (V) in dependence on the optics setting parameter (E), wherein the calculation rule in particular comprises at least one respective polynomial interpolation (F) for a plurality of spatial points (r) that describes the dependence of the portion (T) of the producible light distribution (V) at the respective spatial point (r1) on the optics setting parameter (E).

4. A spotlight system (11) in accordance with any one of the preceding claims, wherein the spotlight system (11) has a calculation device (21) which is configured to determine the spatial light distribution (V) producible by the optical component (15) on the basis of the information (I) stored in the memory (17).

5. A spotlight system (11) in accordance with claim 4,
wherein the calculation device (21) is configured to take into account a value of at least one settable light parameter (P) of the spotlight system (11), in particular a brightness value or a color value, in the determination of the spatial light distribution (V) producible by the optical component (15);
and/or
wherein the spotlight (13) has a plurality of illuminants (25), in particular a plurality of light-emitting diodes, wherein an activation state can be set for each illuminant (25) and/or a common activation state can be set for a group of illuminants (25); wherein the settable activation state of each illuminant (25) comprises a switched-on state, a switched-off state, a switched-on state with a selected brightness and/or a switched-on state with a selected emission spectrum; and wherein the calculation device (21) is configured to determine the spatial light distribution (V) producible by the optical component (15) in dependence on the set activation states of the illuminants (25);
and/or
wherein the spotlight system (11) has an interface (19) which is configured to output the calculated spatial light distribution (V).

6. A spotlight system (11) in accordance with any one of the preceding claims, wherein an article number, a serial number, a half-scatter angle and/or a luminosity value of the optical component (15) is/are stored in the memory (17);
and/or
wherein the spotlight (13) has a coupling device (29) and the optical component (15) has a coupling section (47), wherein the optical component (15) is releasably fastenable to the coupling device (29) of the spotlight (13) via the coupling section (47).

7. An optical component (15) for a spotlight (13) for illuminating a film or stage environment,
wherein the optical component (15) is configured to be coupled to a spotlight (13), which is configured to generate light (L), and is configured, in a state coupled to the spotlight (13), to produce a specific spatial light distribution (V) from the light (L) output by the spotlight (13),
wherein the optical component (15) has a memory (17) in which information (I) on the spatial light distribution (V) producible by the optical component (15) is stored,
**characterized in that**
the stored information (I) represents a spatial brightness distribution and/or a spatial color distribution or spatial spectral distribution producible by the optical component (15),
wherein the stored information (I) represents the light incident on respective spatial points when the optical component (15) is coupled.

8. An optical component (15) in accordance with claim 7,
wherein the optical component (15) has an interface (27) via which the memory (17) can be read;
and/or
wherein the spatial light distribution (V) producible by the optical component (15) can be varied by setting an optics setting parameter (E);
and/or
wherein an article number, a serial number, a half-scatter angle and/or a luminosity value of the optical component (15) is/are stored in the memory (17).

9. An optical component (15) in accordance with claim 7 or claim 8,
wherein the optical component (15) has a calculation device (21) which is configured to determine the spatial light distribution (V) producible by the optical component (15) on the basis of the information (I) stored in the memory (17);
wherein the calculation device (21) is in particular configured to receive data from the coupled spotlight (13) and to take said data into account in the determination of the producible spatial light distribution (V); and/or wherein the calculation device (21) is in particular configured to transmit the calculated spatial light distribution (V) to the coupled spotlight (13).

10. A spotlight (13) for generating light (L) for illuminating a film or stage environment,
said spotlight (13) comprising a coupling device (29) by means of which at least one replaceable optical component (15) can be coupled to the spotlight (13),
wherein the optical component (15) is configured, in a state coupled to the spotlight (13), to produce a specific spatial light distribution (V) from the light (L) output by the spotlight (13),
**characterized by**
a reading device which is configured to read information (I) on the spatial light distribution (V) producible by the optical component (15) from a memory (17) of the coupled optical component (15),
wherein the stored information (I) represents a spatial brightness distribution and/or a spatial color distribution or spatial spectral distribution producible by the optical component (15), and
wherein the stored information (I) represents the light incident on respective spatial points when the optical component (15) is coupled,
wherein the spotlight (13) in particular has an interface (27) which is configured to output the information (I) read or values derived therefrom.

11. A spotlight (13) in accordance with claim 10,
wherein the spotlight (13) has a calculation device (21) which is configured to determine the producible spatial light distribution (V) on the basis of the information (I) read.

12. A spotlight (13) in accordance with claim 11,
wherein the calculation device (21) is configured to determine the producible spatial light distribution (V) whilst taking into account a value of at least one light setting parameter (P) of the spotlight (13), in particular a brightness value or a color value;
and/or
wherein the spotlight (13) has a plurality of illuminants (25), in particular a plurality of light-emitting diodes, wherein an activation state can be set for each illuminant (25) and/or a common activation state can be set for a group of illuminants (25); wherein the settable activation state of each illuminant (25) comprises a switched-on state, a switched-off state, a switched-on state with a selected brightness and/or a switched-on state with a selected emission spectrum; and wherein the calculation device (21) is configured to determine the producible spatial light distribution (V) in dependence on the set activation states of the illuminants (25);
and/or
wherein the calculation device (21) is configured to determine the producible spatial light distribution (V) whilst taking into account a value of at least one settable optics setting parameter (E) of the coupled optical component (15).

13. A spotlight (13) for generating light (L) for illuminating a film or stage environment,
said spotlight (13) comprising an integrated optical component (15), which is configured to produce a specific spatial light distribution (V) from the light (L) output by the spotlight (13), and a memory (17) in which information (I) on the spatial light distribution (V) producible by the optical component (15) is stored,
**characterized in that**
the stored information (I) represents a spatial brightness distribution and/or a spatial color distribution or spatial spectral distribution producible by the optical component (15),
wherein the stored information (I) represents the light incident on respective spatial points when the optical component (15) is coupled.

14. A spotlight (13) in accordance with claim 13,
wherein the spotlight (13) has an interface (19) which is configured to output the stored information (I) or values derived therefrom;
and/or
wherein the spatial light distribution (V) producible by the optical component (15) can be varied by setting at least one optics setting parameter (E); and/or
wherein the spotlight (13) has a calculation device (21) which is connected to the memory (17) and which is configured to determine the producible spatial light distribution (V) on the basis of the information (I) stored in the memory (17), wherein the calculation device (21) is preferably configured to determine the producible spatial light distribution (V) whilst taking into account a value of at least one settable parameter (P) of the spotlight (13), in particular whilst taking into account a value of an optics setting parameter (E) of the optical component (15) and/or a brightness setting and/or a color setting of the spotlight (13).

15. A method of determining a spatial light distribution (V) of a spotlight system (11) which comprises a spotlight (13) for generating light (L) for illuminating a film or stage environment in accordance with any one of the claims 10 to 14; and a replaceable or integrated optical component (15) for producing at least one spatial light distribution (V) - in particular in accordance with any one of the claims 7 to 9 - or that is configured in accordance with any one of the claims 1 to 6,
wherein the optical component (15) is configured, in a state coupled to the spotlight (13), to produce a specific spatial light distribution (V) from the light (L) output by the spotlight (13),
wherein the spatial light distribution (V) depends on a set value of at least one setting parameter (E, P) of the spotlight system (11),
wherein
- the set value of the at least one setting parameter (E, P) is determined (101); and
**characterized in that**
- an approximation of the producible spatial light distribution (V) at the set value of the setting parameter (E, P) is determined (107, 115) on the basis of a calculation rule and/or a look-up table.

16. A method in accordance with claim 15,
wherein the at least one setting parameter comprises an optics setting parameter (E) of the optical component (15), in particular a half-scatter angle of the optical component (15);
and/or
wherein the at least one setting parameter comprises a light setting parameter (P) of the spotlight (13), in particular an activation state of a lighting device (23) of the spotlight (13), a brightness setting of the spotlight (13) and/or a color setting of the spotlight (13).

17. A method in accordance with claim 15 or claim 16,
wherein the determination of the approximation of the spatial light distribution (V) on the basis of the calculation rule comprises only additions, subtractions and/or multiplications;
and/or
wherein the look-up table comprises a plurality of approximations for reference light distributions (Z) at a plurality of respective reference values of the setting parameter (E, P);
and/or
wherein the calculation rule defines a rule for interpolation between a first reference light distribution (Z1) at a first reference value (E1) of the setting parameter (E) and a second reference light distribution (Z2) at a second reference value (E2) of the setting parameter (E).

18. A method in accordance with any one of the claims 15 to 17, wherein, in a parameterization step (203), the calculation rule is determined based on at least a first reference light distribution (Z1) at a first reference value (E1) of the setting parameter (E) and on at least a second reference light distribution (Z2) at a second reference value (E2) of the setting parameter (E).

19. A method in accordance with claim 18,
wherein, in the parameterization step (203), a respective polynomial interpolation (F) is performed for a plurality of predefined or predefinable spatial points (r) in order to parameterize the light (T) incident on the respective spatial point (r1) in dependence on the setting parameter (E, P), wherein interpolation parameters (aᵢ) of the polynomial interpolations (F) are determined on the basis of the reference light distributions (Z1, Z2, Z3), and wherein the calculation rule comprises the respective polynomial interpolations (F) for the plurality of spatial points (r);
or
wherein, in the parameterization step (203), the reference light distributions (Z) are divided into a plurality of wavelength ranges and a respective polynomial interpolation (F) is performed for a plurality of predefined or predefinable spatial points (r) for each of the wavelength ranges in order to parameterize the light (T) incident on the respective spatial point (r1) in dependence on the setting parameter (E), wherein interpolation parameters (aᵢ) of the polynomial interpolations (F) are determined on the basis of the reference light distributions (Z1, Z2, Z3), and wherein the calculation rule comprises the respective polynomial interpolations (F) for the plurality of spatial points (r);
wherein the interpolation parameters (aᵢ) of the polynomial interpolations (F) and the respective spatial points (r) are preferably stored in a memory (17) of the spotlight (13) or of the optical component (15).

20. A computer program product comprising commands which, on execution by a computer, cause it to perform the method in accordance with any one of the claims 15 to 19.

## Revendications

1. Système de projecteur (11) destiné à éclairer un environnement cinématographique ou scénique, comprenant
un projecteur (13) destiné à générer de la lumière (L) et au moins un composant optique (15) pouvant être couplé au projecteur (13), lequel est configuré pour générer, dans un état couplé au projecteur (13), une distribution spatiale de lumière (V) déterminée à partir de la lumière (L) émise par le projecteur (13),
dans lequel le composant optique (15) et/ou le projecteur (13) présente une mémoire (17) dans laquelle est stockée une information (I) concernant la distribution spatiale de lumière (V) pouvant être générée par le composant optique (15),
**caractérisé en ce que**
l'information stockée (I) représente une distribution spatiale de luminosité et/ou une distribution spatiale de couleur ou spectrale pouvant être générée par le composant optique (15),
dans lequel l'information stockée (I) représente la lumière incidente sur des points spatiaux respectifs lorsque le composant optique (15) est couplé.

2. Système de projecteur (11) selon la revendication 1,
dans lequel le système de projecteur (11) présente une interface (19) qui est configurée pour délivrer l'information stockée (I) ou des valeurs qui en sont dérivées.

3. Système de projecteur (11) selon la revendication 1 ou la revendication 2,
dans lequel la distribution spatiale de lumière (V) pouvant être générée par le composant optique (15) est variable par réglage d'au moins un paramètre de réglage optique (E), dans lequel l'information stockée (I) comprend au moins une première information qui représente la distribution spatiale de lumière (V) pouvant être générée par le composant optique (15) à une première valeur du paramètre de réglage optique (E), et une deuxième information qui représente la distribution spatiale de lumière (V) pouvant être générée par le composant optique (15) à une deuxième valeur du paramètre de réglage optique (E) ;
et/ou
dans lequel la distribution spatiale de lumière (V) pouvant être générée par le composant optique (15) est variable par réglage d'au moins un paramètre de réglage optique (E), dans lequel l'information stockée (I) comprend une règle de calcul destinée à déterminer la distribution spatiale de lumière (V) en fonction du paramètre de réglage optique (E), dans lequel la règle de calcul comprend, en particulier pour une pluralité de points spatiaux (r), au moins une interpolation polynomiale respective (F) qui décrit la dépendance de la proportion (T) de la distribution de lumière (V) pouvant être générée au point spatial respectif (r1) par rapport au paramètre de réglage optique (E).

4. Système de projecteur (11) selon l'une des revendications précédentes,
dans lequel le système de projecteur (11) présente un dispositif de calcul (21) qui est configuré pour déterminer la distribution spatiale de lumière (V) pouvant être générée par le composant optique (15) sur la base de l'information (I) stockée dans la mémoire (17).

5. Système de projecteur (11) selon la revendication 4,
dans lequel le dispositif de calcul (21) est configuré pour prendre en compte, lors de la détermination de la distribution spatiale de lumière (V) pouvant être générée par le composant optique (15), une valeur d'au moins un paramètre de lumière réglable (P) du système de projecteur (11), en particulier une valeur de luminosité ou une valeur de couleur ;
et/ou
dans lequel le projecteur (13) présente une pluralité de sources lumineuses (25), en particulier une pluralité de diodes électroluminescentes, dans lequel un état d'activation pour chaque source lumineuse (25) et/ou un état d'activation commun pour un groupe de sources lumineuses (25) est réglable, dans lequel l'état d'activation réglable de chaque source lumineuse (25) comprend un état allumé, un état éteint, un état allumé avec une luminosité sélectionnée et/ou un état allumé avec un spectre d'émission sélectionné, et dans lequel le dispositif de calcul (21) est configuré pour déterminer la distribution spatiale de lumière (V) pouvant être générée par le composant optique (15) en fonction des états d'activation réglés des sources lumineuses (25) ;
et/ou
dans lequel le système de projecteur (11) présente une interface (19) qui est configurée pour délivrer la distribution spatiale de lumière (V) calculée.

6. Système de projecteur (11) selon l'une des revendications précédentes,
dans lequel un numéro d'article, un numéro de série, un angle de demi-diffusion et/ou une valeur d'intensité lumineuse du composant optique (15) sont stockés dans la mémoire (17) ;
et/ou
dans lequel le projecteur (13) présente un dispositif de couplage (29) et le composant optique (15) présente une partie de couplage (47), dans lequel le composant optique (15) peut être fixé de manière détachable au dispositif de couplage (29) du projecteur (13) par l'intermédiaire de la partie de couplage (47).

7. Composant optique (15) destiné à un projecteur (13) destiné à éclairer un environnement cinématographique ou scénique,
dans lequel le composant optique (15) est configuré pour être couplé à un projecteur (13) configuré pour générer de la lumière (L) et, dans un état couplé au projecteur (13), pour générer une distribution spatiale de lumière (V) déterminée à partir de la lumière (L) émise par le projecteur (13),
dans lequel le composant optique (15) présente une mémoire (17) dans laquelle est stockée une information (I) concernant la distribution spatiale de lumière (V) pouvant être générée par le composant optique (15),
**caractérisé en ce que**
l'information stockée (I) représente une distribution spatiale de luminosité et/ou une distribution spatiale de couleur ou spectrale pouvant être générée par le composant optique (15),
dans lequel l'information stockée (I) représente la lumière incidente sur des points spatiaux respectifs lorsque le composant optique (15) est couplé.

8. Composant optique (15) selon la revendication 7,
dans lequel le composant optique (15) présente une interface (27) par l'intermédiaire de laquelle la mémoire (17) peut être lue ;
et/ou
dans lequel la distribution spatiale de lumière (V) pouvant être générée par le composant optique (15) est variable par réglage d'un paramètre de réglage optique (E) ;
et/ou
dans lequel un numéro d'article, un numéro de série, un angle de demi-diffusion et/ou une valeur d'intensité lumineuse du composant optique (15) sont stockés dans la mémoire (17).

9. Composant optique (15) selon la revendication 7 ou la revendication 8,
dans lequel le composant optique (15) présente un dispositif de calcul (21) qui est configuré pour déterminer la distribution spatiale de lumière (V) pouvant être générée par le composant optique (15) sur la base de l'information (I) stockée dans la mémoire (17) ;
dans lequel le dispositif de calcul (21) est notamment configuré pour recevoir des données du projecteur couplé (13) et pour les prendre en compte lors de la détermination de la distribution spatiale de lumière (V) pouvant être générée ; et/ou
dans lequel le dispositif de calcul (21) est notamment configuré pour transmettre la distribution spatiale de lumière (V) calculée au projecteur couplé (13).

10. Projecteur (13) destiné à générer de la lumière (L) pour éclairer un environnement cinématographique ou scénique,
avec un dispositif de couplage (29) au moyen duquel au moins un composant optique interchangeable (15) peut être couplé au projecteur (13),
dans lequel le composant optique (15) est configuré pour générer, dans un état couplé au projecteur (13), une distribution spatiale de lumière (V) déterminée à partir de la lumière (L) émise par le projecteur (13),
**caractérisé par**
un dispositif de lecture qui est configuré pour lire, à partir d'une mémoire (17) du composant optique couplé (15), une information (I) concernant la distribution spatiale de lumière (V) pouvant être générée par le composant optique (15),
dans lequel l'information stockée (I) représente une distribution spatiale de luminosité et/ou une distribution spatiale de couleur ou spectrale pouvant être générée par le composant optique (15), et
dans lequel l'information stockée (I) représente la lumière incidente sur des points spatiaux respectifs lorsque le composant optique (15) est couplé ;
dans lequel le projecteur (13) présente notamment une interface (27) qui est configurée pour délivrer l'information (I) lue ou des valeurs qui en sont dérivées.

11. Projecteur (13) selon la revendication 10,
dans lequel le projecteur (13) présente un dispositif de calcul (21) qui est configuré pour déterminer la distribution spatiale de lumière (V) pouvant être générée sur la base de l'information (I) lue.

12. Projecteur (13) selon la revendication 11,
dans lequel le dispositif de calcul (21) est configuré pour déterminer la distribution spatiale de lumière (V) pouvant être générée en prenant en compte une valeur d'au moins un paramètre de réglage de lumière (P) du projecteur (13), en particulier une valeur de luminosité ou une valeur de couleur ;
et/ou
dans lequel le projecteur (13) présente une pluralité de sources lumineuses (25), en particulier une pluralité de diodes électroluminescentes, dans lequel un état d'activation pour chaque source lumineuse (25) et/ou un état d'activation commun pour un groupe de sources lumineuses (25) est réglable, dans lequel l'état d'activation réglable de chaque source lumineuse (25) comprend un état allumé, un état éteint, un état allumé avec une luminosité sélectionnée et/ou un état allumé avec un spectre d'émission sélectionné, et dans lequel le dispositif de calcul (21) est configuré pour déterminer la distribution spatiale de lumière (V) pouvant être générée en fonction des états d'activation réglés des sources lumineuses (25) ;
et/ou
dans lequel le dispositif de calcul (21) est configuré pour déterminer la distribution spatiale de lumière (V) pouvant être générée en prenant en compte une valeur d'au moins un paramètre de réglage optique (E) réglable du composant optique couplé (15).

13. Projecteur (13) destiné à générer de la lumière (L) pour éclairer un environnement cinématographique ou scénique,
avec un composant optique intégré (15) qui est configuré pour générer une distribution spatiale de lumière (V) déterminée à partir de la lumière (L) émise par le projecteur (13), et avec une mémoire (17) dans laquelle est stockée une information (I) concernant la distribution spatiale de lumière (V) pouvant être générée par le composant optique (15),
**caractérisé en ce que**
l'information stockée (I) représente une distribution spatiale de luminosité et/ou une distribution spatiale de couleur ou spectrale pouvant être générée par le composant optique (15),
dans lequel l'information stockée (I) représente la lumière incidente sur des points spatiaux respectifs lorsque le composant optique (15) est couplé.

14. Projecteur (13) selon la revendication 13,
dans lequel le projecteur (13) présente une interface (19) qui est configurée pour délivrer l'information stockée (I) ou des valeurs qui en sont dérivées ;
et/ou
dans lequel la distribution spatiale de lumière (V) pouvant être générée par le composant optique (15) est variable par réglage d'au moins un paramètre de réglage optique (E) ;
et/ou
dans lequel le projecteur (13) présente un dispositif de calcul (21) relié à la mémoire (17), qui est configuré pour déterminer la distribution spatiale de lumière (V) pouvant être générée sur la base de l'information (I) stockée dans la mémoire (17), dans lequel le dispositif de calcul (21) est de préférence configuré pour déterminer la distribution spatiale de lumière (V) pouvant être générée en prenant en compte une valeur d'au moins un paramètre (P) réglable du projecteur (13), en particulier en prenant en compte une valeur d'un paramètre de réglage optique (E) du composant optique (15) et/ou d'un réglage de luminosité et/ou d'un réglage de couleur du projecteur (13).

15. Procédé destiné à déterminer une distribution spatiale de lumière (V) d'un système de projecteur (11) qui comprend un projecteur (13) destiné à générer de la lumière (L) pour éclairer un environnement cinématographique ou scénique selon l'une des revendications 10 à 14 et un composant optique interchangeable ou intégré (15) destiné à générer au moins une distribution spatiale de lumière (V) - en particulier selon l'une des revendications 7 à 9 - ou qui est configuré selon l'une des revendications 1 à 6,
dans lequel le composant optique (15) est configuré pour générer, dans un état couplé au projecteur (13), une distribution spatiale de lumière (V) déterminée à partir de la lumière (L) émise par le projecteur (13),
dans lequel la distribution spatiale de lumière (V) dépend d'une valeur réglée d'au moins un paramètre de réglage (E, P) du système de projecteur (11),
dans lequel
- la valeur réglée dudit au moins un paramètre de réglage (E, P) est déterminée (101) ; et
**caractérisé en ce que**
- une approximation de la distribution spatiale de lumière (V) pouvant être générée à la valeur réglée du paramètre de réglage (E, P) est déterminée (107, 115) sur la base d'une règle de calcul et/ou d'une table de consultation.

16. Procédé selon la revendication 15,
dans lequel ledit au moins un paramètre de réglage comprend un paramètre de réglage optique (E) du composant optique (15), en particulier un angle de demi-diffusion du composant optique (15) ;
et/ou
dans lequel ledit au moins un paramètre de réglage comprend un paramètre de réglage de lumière (P) du projecteur (13), en particulier un état d'activation d'un dispositif d'éclairage (23) du projecteur (13), un réglage de luminosité du projecteur (13) et/ou un réglage de couleur du projecteur (13).

17. Procédé selon la revendication 15 ou 16,
dans lequel la détermination de l'approximation de la distribution spatiale de lumière (V) sur la base de la règle de calcul comprend uniquement des additions, des soustractions et/ou des multiplications ;
et/ou
dans lequel la table de consultation comprend une pluralité d'approximations pour des distributions de lumière de référence (Z) à une pluralité de valeurs de référence respectives du paramètre de réglage (E, P) ;
et/ou
dans lequel la règle de calcul définit une règle d'interpolation entre une première distribution de lumière de référence (Z1) à une première valeur de référence (E1) du paramètre de réglage (E) et une deuxième distribution de lumière de référence (Z2) à une deuxième valeur de référence (E2) du paramètre de réglage (E).

18. Procédé selon l'une des revendications 15 à 17,
dans lequel, lors d'une étape de paramétrisation (203), la règle de calcul est déterminée sur la base d'au moins une première distribution de lumière de référence (Z1) à une première valeur de référence (E1) du paramètre de réglage (E) et d'au moins une deuxième distribution de lumière de référence (Z2) à une deuxième valeur de référence (E2) du paramètre de réglage (E).

19. Procédé selon la revendication 18,
dans lequel, lors de l'étape de paramétrisation (203), pour une pluralité de points spatiaux prédéterminés ou pouvant être prédéterminés (r), une interpolation polynomiale respective (F) est réalisée pour paramétrer la lumière (T) incidente sur le point spatial respectif (r1) en fonction du paramètre de réglage (E, P), dans lequel des paramètres d'interpolation (aᵢ) des interpolations polynomiales (F) sont déterminés sur la base des distributions de lumière de référence (Z1, Z2, Z3), et dans lequel la règle de calcul comprend les interpolations polynomiales respectives (F) pour la pluralité de points spatiaux (r) ;
ou
dans lequel, lors de l'étape de paramétrisation (203), les distributions de lumière de référence (Z) sont divisées en une pluralité de plages de longueurs d'onde et, pour une pluralité de points spatiaux prédéterminés ou pouvant être prédéterminés (r), une interpolation polynomiale respective (F) est réalisée pour chacune des plages de longueurs d'onde afin de paramétrer la lumière (T) incidente sur le point spatial respectif (r1) en fonction du paramètre de réglage (E), dans lequel des paramètres d'interpolation (aᵢ) des interpolations polynomiales (F) sont déterminés sur la base des distributions de lumière de référence (Z1, Z2, Z3), et dans lequel la règle de calcul comprend les interpolations polynomiales respectives (F) pour la pluralité de points spatiaux (r) ;
dans lequel les paramètres d'interpolation (aᵢ) des interpolations polynomiales (F) et les points spatiaux respectifs (r) sont de préférence stockés dans une mémoire (17) du projecteur (13) ou du composant optique (15).

20. Produit de programme d'ordinateur, comprenant des instructions qui, lors de leur exécution par un ordinateur, amènent celui-ci à exécuter le procédé selon l'une des revendications 15 à 19.
